# EUROPEAN PATENT APPLICATION

(11) **EP 4 685 905 A1**
(43) Date of publication of application: **28.01.2026**
(21) Application number: 24781080.7
(22) Date of filing: 18.03.2024
(51) Int. Cl.: H01M 10/0562, H01M 4/13, H01M 4/62, H01M 10/052, H01M 4/38, H01M 4/48

(54) **ALL-SOLID-STATE SECONDARY BATTERY**

(30) Priority: 26.03.2023 KR 20230039369; 03.07.2023 KR 20230085979
(71) Applicant: SAMSUNG SDI CO., LTD., Yongin-si, Gyeonggi-do 17084 (KR)
(72) Inventor: SON, In Hyuk, Yongin-Si Gyeonggi-do 17084 (KR); JO, Sung Nim, Yongin-Si Gyeonggi-do 17084 (KR); SHIM, Kyu Eun, Yongin-Si Gyeonggi-do 17084 (KR); LIM, Hyung Sub, Yongin-Si Gyeonggi-do 17084 (KR); PARK, Tae Hyun, Yongin-Si Gyeonggi-do 17084 (KR); LEE, Ji Eun, Yongin-Si Gyeonggi-do 17084 (KR)
(74) Representative: Meissner Bolte Partnerschaft mbB
(86) International application number: PCT/KR2024/003354
(87) International publication number: WO 2024/205089

(57) **Abstract**

An all-solid-state secondary battery includes: a cathode layer; an anode layer; and a solid electrolyte layer between the cathode layer and the anode layer, wherein the cathode layer includes a cathode current collector and a cathode active material layer on at least one surface of the cathode current collector, at least one of the cathode active material layer and the solid electrolyte layer includes a first fibrous sulfide-based solid electrolyte, the anode layer includes an anode current collector and a first anode active material layer on one surface of the anode current collector, and an initial charge capacity (B) of the first anode active material layer is less than about 50% of an initial charge capacity (A) of the cathode active material layer.

## Description

### Technical Field

The present disclosure relates to an all-solid-state secondary battery.

### Background Art

Recently, there has been active development of batteries that provide increased energy density and safety. Lithium batteries are used in information devices, communication devices, automobiles, and the like Since automobiles are related to human life, safety is important.

Lithium batteries including liquid electrolytes include flammable organic solvents. Lithium batteries including liquid electrolytes have a high risk of overheating and fire in the event of a short circuit.

As compared to liquid electrolytes, solid electrolytes have a reduced risk of overheating and fire in the event of a short circuit. Lithium batteries including solid electrolytes may provide improved safety as compared to lithium batteries including liquid electrolytes.

### Disclosure of Invention

### Technical Problem

A lithium battery includes a cathode active material layer, and the cathode active material layer may include a conductive material to improve charge/discharge characteristics. The conductive material is, for example, a carbon-based conductive material. The carbon-based conductive material has high electronic conductivity but low ionic conductivity. A solid electrolyte may be used to improve the ionic conductivity of the cathode active material layer. Conventional solid electrolytes have a particle shape with an aspect ratio of, for example, less than 2. Conventional solid electrolyte particles with an aspect ratio of less than 2 may have a difficulty forming long-distance ion conduction paths. In lithium batteries including conventional solid electrolyte particles having an aspect ratio of less than 2, the possibility of disconnection of ion conduction paths occurring during charging and discharging of the lithium batteries increases. A lithium battery includes, for example, a sulfide-based cathode active material, and the sulfide-based cathode active material may undergo a significant volume change during charging and discharging. During charging and discharging of a lithium battery, conventional solid electrolyte particles having an aspect ratio of less than 2 may have difficulty suppressing the disconnection of ion conduction paths and the increase in internal resistance due to the volume change of a sulfide-based cathode active material. Accordingly, there is required a method that can suppress the disconnection of ion conduction paths of a cathode active material layer due to a change in the volume of the cathode active material and suppress an increase in the internal resistance of a lithium battery during charging and discharging of the lithium battery.

Lithium batteries including solid electrolytes may have relatively increased interfacial resistance and decreased ionic conductivity compared to lithium batteries including liquid electrolytes. Accordingly, lithium batteries including solid electrolytes may have relatively poor high-rate characteristics and output characteristics compared to lithium batteries including liquid electrolytes. Therefore, there is required a method of increasing the high-rate characteristics and output characteristics of a lithium battery including a solid electrolyte by decreasing interfacial resistance and increasing ionic conductivity in the lithium battery including a solid electrolyte.

An aspect is to provide a novel all-solid-state secondary battery.

### Solution to Problem

According to an embodiment, there is provided an all-solid-state secondary battery including:
a cathode layer; an anode layer; and a solid electrolyte layer between the cathode layer and the anode layer,
wherein the cathode layer includes a cathode current collector and a cathode active material layer on at least one surface (e.g., one surface or both surfaces) of the cathode current collector,
at least one of the cathode active material layer and the solid electrolyte layer includes a first fibrous sulfide-based solid electrolyte,
the anode layer includes an anode current collector and a first anode active material layer on one surface of the anode current collector, and
an initial charge capacity (B) of the first anode active material layer is less than about 50% of an initial charge capacity (A) of the cathode active material layer.

According to another embodiment, there is provided an all-solid-state secondary battery including:
a cathode layer; an anode layer; and a solid electrolyte layer between the cathode layer and the anode layer,
wherein the cathode layer includes a cathode current collector and a cathode active material layer on at least one surface (e.g., one surface or both surfaces) of the cathode current collector,
at least one of the cathode active material layer and the solid electrolyte layer includes a first fibrous sulfide-based solid electrolyte, and
the anode layer includes an anode current collector and a first anode active material layer on one surface (e.g., one surface or both surfaces) of the anode current collector.

According to another embodiment, there is provided an all-solid-state secondary battery including:
a cathode layer; an anode layer; and a solid electrolyte layer between the cathode layer and the anode layer,
wherein the cathode layer includes a cathode current collector and a cathode active material layer on one surface or both surfaces of the cathode current collector, and
at least one of the cathode active material layer and the solid electrolyte layer includes a first fibrous sulfide-based solid electrolyte.

### Advantageous Effects of Invention

According to one aspect, it is possible to provide an all-solid-state secondary battery with improved cycle characteristics by using an all-solid-state secondary battery having a novel structure.

### Brief Description of Drawings

FIG. 1 is a schematic view of a fibrous sulfide-based solid electrolyte according to an exemplary embodiment.
FIG. 2 is a schematic view of a fibrous sulfide-based solid electrolyte having a core/shell structure according to an exemplary embodiment.
FIG. 3 is a schematic view of a fibrous sulfide-based solid electrolyte having a core/shell structure according to an exemplary embodiment.
FIG. 4 is a cross-sectional view of a fibrous sulfide-based solid electrolyte having a core/shell structure according to an exemplary embodiment.
FIG. 5 is a schematic view of a fibrous sulfide-based solid electrolyte having a core/interlayer/shell structure according to an exemplary embodiment.
FIGS. 6A to 6C are cross-sectional views of a cathode active material layer including a fibrous sulfide-based solid electrolyte according to an exemplary embodiment.
FIG. 7 is a cross-sectional view of an all-solid-state secondary battery according to an exemplary embodiment.
FIG. 8 is a cross-sectional view of a bi-cell all-solid-state secondary battery according to an exemplary embodiment.
FIG. 9 is a cross-sectional view of an all-solid-state secondary battery according to an exemplary embodiment.
FIG. 10 is a cross-sectional view of an all-solid-state secondary battery according to an exemplary embodiment.
FIG. 11 is a cross-sectional view of a bi-cell all-solid-state secondary battery according to an exemplary embodiment.

### Best Mode for Carrying out the Invention

Various embodiments are illustrated in the attached drawings. However, the present creative idea may be embodied in many different forms and should not be construed as limited to the embodiments described in this disclosure. Rather, these embodiments are provided so that this disclosure will be made thoroughly and completely, and will fully transfer the scope of the present inventive concept to those skilled in the art. Identical reference numerals refer to identical components.

When a component is referred to as being "over" another component, it can be understood that it may be directly on another component, or that there may be other components intervening therebetween. In contrast, when a component is said to be "directly on" another component, there are no intervening component therebetween.

The terms "first," "second," "third," etc. may be used herein to describe various components, ingredients, regions, layers, and/or zones, these components, ingredients, regions, layers, and/or zones should not be limited by these terms. These terms are used only to distinguish one component, ingredient, region, layer or zone from another component, ingredient, region, layer or zone. Accordingly, a first component, ingredient, region, layer or zone described below may be referred to as a second component, ingredient, region, layer or zone without departing from the teachings of the present disclosure.

The terms used in this specification are for the purpose of explaining only particular embodiments and are not intended to limit the present inventive concept. The singular form used in the present application is intended to include the plural form including "at least one" unless the context clearly dictates otherwise. At least one" should not be construed as limiting to the singular. As used in this specification, the term "and/or" includes any and all combinations of one or more of the listed items. The terms "include" and/or "including" as used in the detailed description specify stated features, regions, integers, steps, operations, components and/or ingredients, but do not preclude the presence or addition of one or more other features, regions, integers, steps, operations, components and/or ingredients.

Spatially relative terms such as "bottom," "below," "lower," "upper," "top," and the like may be used herein to easily describe the relationship of one component or feature to another component or feature. It will be understood that spatially relative terms are intended to include different directions of a device when used or operated in addition to the directions illustrated in the drawings. For example, if the device in the drawing is overturned, a component described as being "under" or "below" another component or feature would be oriented "above" the other component or feature. Thus, the exemplary term "below" may include both upward and downward directions. The above device may be placed in other directions (rotated 90 degrees or in other directions), and the spatially relative terms used in this specification may be interpreted accordingly.

Unless otherwise defined, all terms (including technical and scientific terms) used in this disclosure have the same meaning as commonly understood by one of ordinary skill in the art to which this disclosure belongs. It will also be understood that terms defined in commonly used dictionaries should be interpreted as having a meaning consistent with their meaning within the context of the relevant art and the present disclosure, and not in an idealized or overly formal sense.

Exemplary embodiments are described in this specification with reference to cross-sectional views which are schematic views of idealized embodiments. Like this, variations from the shapes of the drawings should be expected as a result of manufacturing techniques and/or tolerances. Therefore, the embodiments described in this specification should not be construed as being limited to the specific shapes of regions as illustrated in the drawings of this disclosure, and should include, for example, deviations in shapes resulting from manufacturing. For example, a region illustrated or described as flat may typically have rough and/or non-linear features. Further, sharply illustrated angles may be round. Accordingly, the regions illustrated in the drawings are schematic in nature, and their shapes are not intended to illustrate the precise shape of the regions and are not intended to limit the scope of claims.

The "group" refers to a group of the periodic table of elements according to the International Union of Pure and Applied Chemistry ("IUPAC") Group 1 to18 classification system.

In this specification, the "aspect ratio" may be measured from, for example, scanning electron microscope (SEM), transmission electron microscope (TEM) or atomic force microscope (AFM) images.

In this specification, the "length," "diameter," and/or "thickness" of a fibrous sulfide-based solid electrolyte may be measured from, for example, scanning electron microscope (SEM), transmission electron microscope (TEM), or atomic force microscope (AFM) images.

In this specification, the "thickness" and/or "diameter" of the core and shell of a fibrous sulfide-based solid electrolyte may be measured, for example, from scanning electron microscope (SEM), transmission electron microscope (TEM) or atomic force microscope (AFM) images.

In this specification, the "particle diameter" refers to an average diameter when a particle is spherical, and refers to an average major axis length when the particle is non-spherical. The particle diameter may be measured using a particle size analyzer (PSA). The "particle diameter" is, for example, an average particle diameter. The "average particle diameter" is, for example, a median particle diameter, D50.

D50 is a size of the particle corresponding to 50% of the cumulative volume, calculated from the side of the particle with the smaller particle size in the size distribution of the particles measured by laser diffraction.

D90 is a size of the particle corresponding to 90% of the cumulative volume, calculated from the side of the particle with the smaller particle size in the size distribution of the particles measured by laser diffraction.

D10 is a size of the particle corresponding to 10% of the cumulative volume, calculated from the side of the particle with the smaller particle size in the size distribution of the particles measured by laser diffraction.

In this disclosure, the "metal" includes both metals and metalloids such as silicon and germanium, in either an elemental or ionic state.

In this disclosure, the "alloy" refers to a mixture of two or more metals.

In this disclosure, the "electrode active material" refers to an electrode material capable of undergoing sodiation and desodiation.

In this disclosure, the "cathode active material" refers to a cathode material capable of undergoing sodiation and desodiation.

In this disclosure, the "anode active material" refers to an anode material capable of undergoing sodiation and desodiation.

In this disclosure, the "lithiation" and "lithiating" refer to a process of adding sodium to an electrode active material.

In this disclosure, the "delithiation" and "delithiating" refer to a process of removing sodium from an electrode active material.

In this disclosure, the "charge" and "charging" refer to a process of providing electrochemical energy to a battery.

In this disclosure, the "discharge" and "discharging" refer to a process of removing electrochemical energy from a battery.

In this disclosure, the "positive electrode" or "cathode" refers to an electrode where electrochemical reduction and sodiation occur during a discharge process.

In this disclosure, the "negative electrode" or "anode" refers to an electrode where electrochemical oxidation and desodiation occur during a discharge process.

Although specific embodiments have been described, alternatives, modifications, variations, improvements, and substantial equivalents, which are not currently anticipated or cannot be anticipated, may occur to the applicant or those skilled in the art. Accordingly, the appended claims, as filed and as amended, are intended to include all such alternatives, modifications, variations, improvements and substantial equivalents.

Hereinafter, all-solid-state secondary batteries according to exemplary embodiments will be described in more detail.

### [All-solid-state secondary battery]

All-solid-state secondary battery according to an embodiment includes a cathode layer; an anode layer; and a solid electrolyte layer between the cathode layer and the anode layer, wherein the cathode layer includes a cathode current collector and a cathode active material layer on at least one surface of the cathode current collector, at least one of the cathode active material layer and the solid electrolyte layer includes a first fibrous sulfide-based solid electrolyte, the anode layer includes an anode current collector and a first anode active material layer on one surface of the anode current collector, and an initial charge capacity (B) of the first anode active material layer is less than about 50% of an initial charge capacity (A) of the cathode active material layer.

An all-solid-state secondary battery includes a cathode active material layer, and the cathode active material layer includes a first fibrous sulfide-based solid electrolyte, so that a longer ion conduction path can be secured in the cathode active material layer. Therefore, during the charging and discharging of the all-solid-state secondary battery, the disconnection of the ion conduction path due to a change in the volume of the cathode active material in the cathode active material layer can be more effectively prevented. As a result, the initial efficiency, discharge capacity, high-rate characteristics, and/or cycle life characteristics of the all-solid-state secondary battery can be improved.

An all-solid-state secondary battery includes a cathode active material layer, and the cathode active material layer includes a first fibrous sulfide-based solid electrolyte, so that the uniformity of an ion conducting path in the cathode active material layer can be improved. Therefore, the pressure required for manufacturing an all-solid-state secondary battery can be reduced. That is, an all-solid-state secondary battery having an excellent ion conduction path even at reduced pressure can be implemented. In addition, it is possible to effectively prevent the formation of local overvoltage within the cathode active material layer during the charge/discharge process of an all-solid-state secondary battery.

An all-solid-state secondary battery includes a cathode active material layer, and the cathode active material layer includes a first fibrous sulfide-based solid electrolyte having a reduced specific surface area, so that moisture stability can be increased, side reactions between the cathode active material and the sulfide-based solid electrolyte can be reduced, interfacial resistance of the cathode active material layer can be reduced, and a decrease in ionic conductivity can be suppressed. Therefore, the high-rate characteristics and output characteristics of the all-solid-state secondary battery can be improved.

An all-solid-state secondary battery includes a cathode active material layer, and the cathode active material layer includes a first fibrous sulfide-based solid electrolyte, so that a change in the volume of the cathode active material during charging and discharging can be accommodated more effectively. A fibrous sulfide-based solid electrolyte may be disposed around the cathode active material in the cathode active material layer. Since the fibrous sulfide-based solid electrolyte can accommodate a change in volume of the cathode active material during charge and discharge by dispersing the change throughout the entire length of the cathode active material, the fibrous sulfide-based solid electrolyte can accommodate the change in volume of the cathode active material more effectively compared to a sulfide-based solid electrolyte having a spherical particle shape. As a result, the disconnection between the cathode active material and the solid electrolyte due to the change in the volume of the cathode active material within the cathode active material layer can be suppressed, and the uniformity of components in the cathode active material layer can be improved. As a result, the cycle characteristics of the all-solid-state secondary battery can be improved.

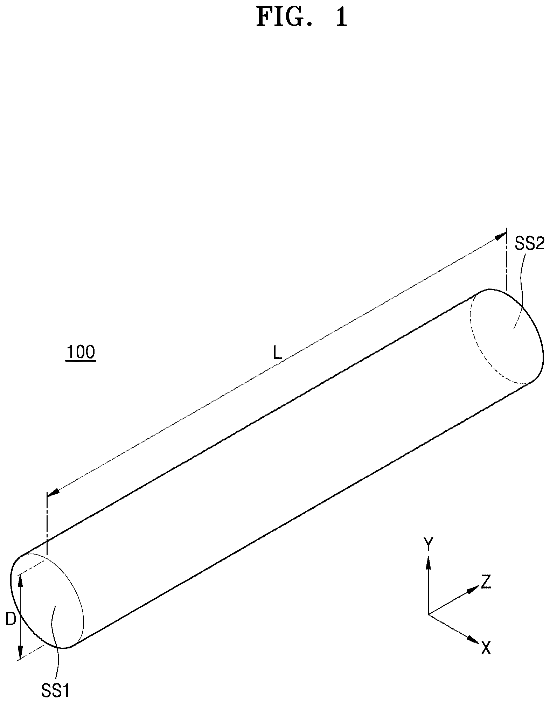

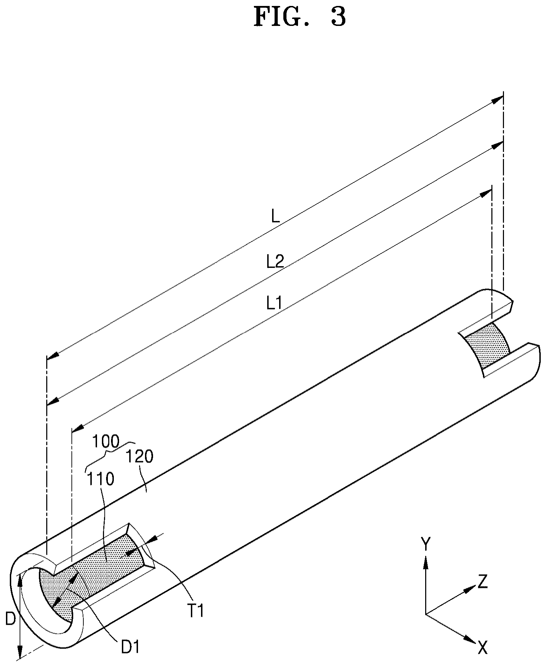

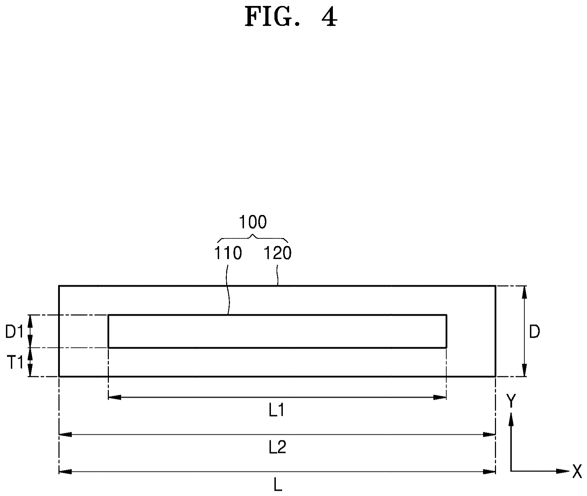

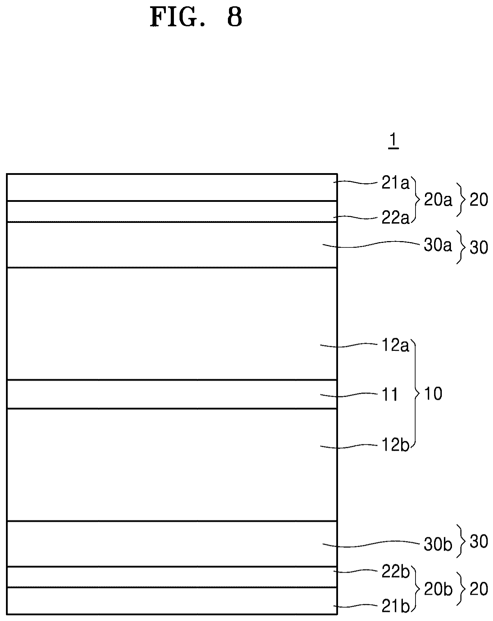

Referring to FIGS. 1 to 11, an all-solid-state secondary battery 1 includes a cathode layer 10; an anode layer 20; and a solid electrolyte layer 30 disposed between the cathode layer 10 and the anode layer 20. The cathode layer 10 includes a cathode current collector 11 and a cathode active material layer 12 disposed on one or both surfaces of the cathode current collector 11. The cathode active material layer 12, the solid electrolyte layer 30, or a combination thereof includes a first fibrous sulfide-based solid electrolyte 100. The anode layer 20 includes an anode current collector 21 and a first anode active material layer 22 disposed on one surface of the anode current collector 21. The initial charge capacity (B) of the first anode active material layer 22 is less than 50% of the initial charge capacity (A) of the cathode active material layer 12.

### [Cathode layer]

### [Cathode layer: solid electrolyte]

The cathode active material layer 12 includes a first fibrous sulfide-based solid electrolyte.

Referring to FIGS. 1 to 5, the first fibrous sulfide-based solid electrolyte 100 is defined by a length L and a diameter D. The length L of the first fibrous sulfide-based solid electrolyte 100 is a distance between both ends of the first fibrous sulfide-based solid electrolyte 100 in the lengthwise direction (z direction). The diameter D of the first fibrous sulfide-based solid electrolyte 100 is a maximum value of the distances between both ends of the first fibrous solid electrolyte 100 in a direction perpendicular to the lengthwise direction (z direction) of the first fibrous sulfide-based solid electrolyte 100. Alternatively, the first fibrous sulfide-based solid electrolyte 100 includes a first side surface SS1 and a second side surface SS2 opposite the first side surface SS1, and is defined by an area of the first side surface SS1 or the second side surface SS2 and a distance between the first side surface SS1 and the second side surface SS1. The area of the first side surface SS1 or the second side surface SS2 is, for example, a product of the maximum and minimum values of the distance between both ends of the perimeter of the first side surface SS1 or the second side surface SS2. The distance between the first side surface SS1 and the second side surface SS2 is a maximum value of the length from the first side surface SS1 to the second side surface SS2. Alternatively, the area of the first side surface SS1 or the second side surface SS2 is an integral value of the area read from a scanning electron microscope plan view image viewed in the lengthwise direction (z direction) of the first fibrous sulfide-based solid electrolyte 100. The distance between the first side surface SS1 and the second side surface SS2 is a maximum value of the length read from a scanning electron microscope image viewed in a direction (x direction or y direction) orthogonal to the lengthwise direction of the first fibrous sulfide-based solid electrolyte 100.

The aspect ratio of the length L and diameter D of the first fibrous sulfide-based solid electrolyte 100 is, for example, 5 or more, 10 or more, 15 or more, 20 or more, or 30 or more. The aspect ratio of the length L and diameter D of the first fibrous sulfide-based solid electrolyte 100 is, for example, 5 to 1000, 5 to 600, 5 to 400, 5 to 200, or 10 to 200. Since the aspect ratio of the first fibrous sulfide-based solid electrolyte 100 is within this range, an ion conduction path is extended within the lithium battery including the first fibrous sulfide-based solid electrolyte 100, a change in the volume of the cathode active material during charging and discharging of the lithium battery can be accommodated more effectively, and the ion conduction path within the lithium battery can be maintained despite the change in the volume of the cathode active material. As a result, the deterioration of the lithium battery can be suppressed, and the cycle characteristics of the lithium battery can be improved.

The length L of the first fibrous sulfide-based solid electrolyte 100 may be, for example, 0.1 µm to 100 µm, 0.5 µm to 100 µm, 1 µm to 100 µm, 1 µm to 50 µm, 1 µm to 30 µm, 1 µm to 20 µm, or 1 µm to 10 µm. The diameter D of the first fibrous sulfide-based solid electrolyte 100 may be, for example, 10 nm to 10 µm, 10 nm to 5 µm, 50 nm to 5 µm, 100 nm to 5 µm, 100 nm to 3 µm, 100 nm to 2 µm, 200 nm to 2 µm, 200 nm to 1.5 µm, or 200 nm to 1 µm. The diameter D of the first fibrous sulfide-based solid electrolyte 100 may be, for example, 10 nm to 10 µm, 10 nm to 5 µm, 10 nm to 1 µm, 10 nm to 800 nm, 10 nm to 500 nm, 10 nm to 300 nm, 10 nm to 200 nm, or 10 nm to 100 nm. Since the length and/or diameter of the first fibrous sulfide-based solid electrolyte 100 are within these ranges, an ion conduction path is extended within the lithium battery including the first fibrous sulfide-based solid electrolyte 100, a change in the volume of the cathode active material during charging and discharging of the lithium battery can be accommodated more effectively, and the ion conduction path within the lithium battery can be maintained despite the change in the volume of the cathode active material. As a result, the deterioration of the lithium battery can be suppressed, and the cycle characteristics of the lithium battery can be improved.

The first fibrous sulfide-based solid electrolyte 100 may have, for example, a rod structure, a tube structure, a needle structure, a wire structure, or a combination thereof, but is not necessarily limited to these forms, and any fibrous structure used in the relevant technical field is possible. Since the first fibrous sulfide-based solid electrolyte 100 has a rod structure, a tube structure, a needle structure, a wire structure, or the like, an ion conduction path is extended within the lithium battery including the first fibrous sulfide-based solid electrolyte 100, a change in the volume of the cathode active material during charging and discharging of the lithium battery can be accommodated more effectively, and the ion conduction path within the lithium battery can be maintained despite the change in the volume of the cathode active material. As a result, the deterioration of the lithium battery can be suppressed, and the cycle characteristics of the lithium battery can be improved.

The cross-section orthogonal to the lengthwise direction of the first fibrous sulfide-based solid electrolyte 100, that is, the side surface SS1, SS2 of the first fibrous sulfide-based solid electrolyte 100, may have, for example, an irregular, circular or polygonal shape. The shape of the side surface SS1, SS2 of the first fibrous sulfide-based solid electrolyte 100 is, for example, a shape determined by a plan view viewed in the lengthwise direction (z direction) of the first fibrous sulfide-based solid electrolyte 100. The polygonal shape includes, but are not necessarily limited to, a triangular shape, a quadrangular shape, a pentagonal shape, a hexagonal shape, a heptagonal shape, an octagonal shape, a nonagonal shape, or a decagonal shape, and any polygonal shape used in the art may be used. The circular shape may include shapes such as a perfect circle, an oval, and the like. but is not limited to these shapes, and any shape that has an overall circular shape is possible. The circularity of the cross-section orthogonal to the lengthwise direction of the first fibrous sulfide-based solid electrolyte 100, that is, the circularity of the side surface SS1, SS2 of the first fibrous sulfide-based solid electrolyte 100, may be, for example, 0.6 or more, 0.7 or more, 0.8 or more, or 0.9 or more. The circularity is calculated, for example, by 4πA/P², where A is an area of the side surface SS1, SS2 or cross section of the first fibrous sulfide-based solid electrolyte 100 and P is a perimeter of the side surface SS1, SS2 or the cross section.

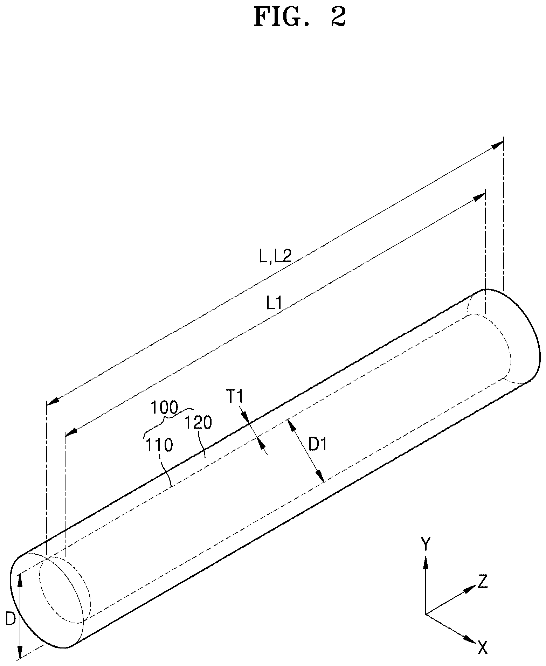

Referring to FIGS. 2 to 5, the first fibrous sulfide-based solid electrolyte 100 may have, for example, a core 110/shell 120 structure including a core 110 and a shell 120 disposed on the core 110. Since the first fibrous sulfide-based solid electrolyte 100 has a core 110/shell 120 structure, an ion conduction path is extended within the lithium battery including the first fibrous sulfide-based solid electrolyte 100, a change in the volume of the cathode active material during the charging and discharging of the lithium battery can be accommodated more effectively, and the ion conduction path within the lithium battery can be maintained despite the change in the volume of the cathode active material. As a result, the deterioration of the lithium battery can be suppressed, and the cycle characteristics of the lithium battery can be improved. In contrast, a simple mixture of the core 110 and the shell 120 is prone to cause agglomeration of the core 110 and/or agglomeration of the shell 120, and therefore fails to provide an extended ion conduction path within the lithium battery, cannot more effectively accommodate a change in the volume of the cathode active material during charging and discharging of the lithium battery, and the ion conduction path within the lithium battery may be interrupted due to the change in the volume of the cathode active material. As a result, the deterioration of the lithium battery may increase and the cycling characteristics of the lithium battery may deteriorate. Therefore, the first fibrous sulfide-based solid electrolyte 100 having a core 110/shell 120 structure is a composite in which the core 110 is covered by the shell 120, and is distinguished from a simple mixture of the core 110 material and the shell 120 material.

The core 110 may include, for example, a carbon-based material, a polymer material, a metal-containing inorganic material, a sulfide-based solid electrolyte, an oxide-based solid electrolyte, or a combination thereof. The core 110 may be any material capable of forming a fibrous structure.

Examples of the carbon-based material may include, but are not limited to, artificial graphite, natural graphite, carbon black (CB), acetylene black (AB), furnace black (FB), ketjen black (KB), graphene, graphene oxide, reduced graphene oxide, carbon nanobelt, and carbon nanosheet, and any carbon-based material having a fibrous structure used in the relevant technical field is possible.

Examples of the polymer material may include, but are not limited to, poly-2-vinylpyridine, polytetrafluoroethylene, tetrafluoroethylene-hexafluoropropylene copolymer, polychlorotrifluoroethylene, perfluoroalkoxy copolymer, fluorinated cyclic ether, polyethylene oxide diacrylate, polyethylene oxide dimethacrylate, polypropylene oxide diacrylate, polypropylene oxide dimethacrylate, polymethylene oxide diacrylate, polymethylene oxide dimethacrylate, polyalkyldiol diacrylate, polyalkyldiol dimethacrylate, polydivinylbenzene, polyether, polycarbonate, polyamide, polyester, polyvinyl chloride, polyimide, polycarboxylic acid, polysulfonic acid, polyvinyl alcohol, polysulfone, polystyrene, polyethylene, polypropylene, poly(p-phenylene), polyacetylene, poly(p-phenylene vinylene), polyaniline, polypyrrole, polythiophene, poly(2,5-ethylene vinylene), polyacene, and poly(naphthalene-2,6-diyl), polyethylene oxide, polypropylene oxide, polyvinylidene fluoride, copolymer of vinylidene fluoride and hexafluoropropylene, poly(vinylacetate), poly(vinyl butyral-co-vinyl alcohol-co-vinyl acetate), poly(methyl methacrylate-co-ethyl acrylate), polyacrylonitrile, polyvinyl chloride co-vinyl acetate, poly(1-vinylpyrrolidone-co-vinyl acetate), polyvinylpyrrolidone, polyacrylates, polymethacrylates, polyurethanes, polyvinyl ethers, acrylonitrile-butadiene rubber, styrene-butadiene rubber, acrylonitrile-butadiene-styrene rubber, sulfonated styrene/ethylene-butylene triblock copolymer, a polymer obtained from at least one acrylate monomer selected from the group consisting of ethoxylated neopentyl glycol diacrylate, ethoxylated bisphenol A diacrylate, ethoxylated aliphatic urethane acrylate, ethoxylated alkylphenol acrylate and alkyl acrylate, and at least one selected from polyvinyl alcohol, polyimide, epoxy resin and acrylic resin, or a combination thereof, and any polymer capable of forming a fibrous structure in the relevant field is possible. The polymer material may additionally include a lithium salt.

Examples of the metal-containing inorganic material may include, but are not limited to, SiO₂, TiO₂, Al₂O₃, AIN, SiC, BaTiO₃, MOF (Metal Organic Framework), POSS (Polyhedral Oligomeric Silsesquioxanes), Li₂CO₃, Li₃PO₄, Li₃N, Li₃S₄, Li₂O, montmorillonite, or a combination thereof, and any metal-containing inorganic material capable of forming a fibrous structure in the relevant field is possible. The metal-containing inorganic material may have a fibrous structure.

The sulfide-based solid electrolyte is, for example, at least one selected from Li₂S-P₂S₅, Li₂S-P₂S₅-LiX (where X is a halogen element), Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (where m and n are positive numbers, and Z is one of Ge, Zn, and Ga), Li₂S-GeS₂, Li₂S-SiS₂-Li₃PO₄, Li₂S-SiS₂-LiₚMO_{q} (where p and q are positive numbers, and M is one of P, Si, Ge, B, Al, Ga, and In), Li₇₋ₓPS₆₋ₓClₓ (0≤x≤2), Li₇₋ₓPS₆₋ₓBrₓ (0≤x≤2), and Li₇₋ₓPS₆₋ₓIₓ, (0≤x≤2). The sulfide-based solid electrolyte is prepared by treating starting materials such as Li₂S and P₂S₅ using a melt quenching method or a mechanical milling method. After this treatment, heat treatment may performed. The sulfide-based solid electrolyte may be amorphous, crystalline, or a mixed state thereof. In addition, the sulfide-based solid electrolyte may include, for example, sulfur (S), phosphorus (P), and lithium (Li) as at least constituent elements among the above-described sulfide-based solid electrolyte materials. For example, the sulfide-based solid electrolyte may be a material including Li₂S-P₂S₅. When using a sulfide-based solid electrolyte material including Li₂S-P₂S₅, the mixed molar ratio of Li₂S and P₂S₅ is, for example, in the range of Li₂S: P₂S₅ = 50:50 to 90:10. The sulfide-based solid electrolyte may be an argyrodite-type compound including at least one selected from Li₇₋ₓPS₆₋ₓClₓ, 0≤x≤2, Li₇₋ₓPS₆₋ₓBrₓ, 0≤x≤2, and Li₇₋ₓPS₆₋ₓIₓ, 0≤x≤2. The sulfide-based solid electrolyte may include at least one selected from Li₆PS₅Cl, Li₆PS₅Br, and Li₆PS₅I. The sulfide-based solid electrolyte may have a fibrous structure.

The oxide-based solid electrolyte may be, for example, Li_{1+x+y}AlₓTi₂₋ₓSi_{y}P_{3-y}O₁₂ (0<x<2, 0≤y<3), BaTiO₃, Pb(Zr,Ti)O₃(PZT), Pb₁₋ₓLaₓZr_{1-y}Ti_{y}O₃(PLZT)(0≤x<1, 0≤y<1), PB(Mg₃Nb_{2/3})O₃-PbTiO₃(PMN-PT), HfO₂, SrTiO₃, SnO₂, CeO₂, Na₂O, MgO, NiO, CaO, BaO, ZnO, ZrO₂, Y₂O₃, Al₂O₃, TiO₂, SiO₂, Li₃PO₄, LiₓTi_{y}(PO₄)₃(0<x<2, 0<y<3), LiₓAl_{y}Ti_{z}(PO₄)₃ (0<x<2, 0<y<1, 0<z<3), Li_{1+x+y}(Al, Ga)ₓ(Ti, Ge)₂₋ₓSi_{y}P_{3-y}O₁₂(0≤x≤1 0≤y≤1), LiₓLa_{y}TiO₃ (0<x<2, 0<y<3), Li₂O, LiOH, Li₂CO₃, LiAlO₂, Li₂O-Al₂O₃-SiO₂-P₂O₅-TiO₂-GeO₂, Li₃₊ₓLa₃M₂O₁₂(M = Te, Nb, or Zr, 0≤x≤10), or a combination thereof. The oxide-based solid electrolyte is prepared, for example, by a sintering method or the like. The oxide-based solid electrolyte is, for example, a garnet-type solid electrolyte selected from Li₇La₃Zr₂O₁₂ (LLZO) and Li₃₊ₓLa₃Zr₂₋ₐMₐO₁₂ (M doped LLZO, M=Ga, W, Nb, Ta, or Al, 0<a<2, 0≤x≤10). The oxide-based solid electrolyte may have a fibrous structure.

The carbon-based material, polymer, metal-containing inorganic material or a combination thereof may further include P, S or a combination thereof. The carbon-based material, polymer, metal-containing inorganic material or a combination thereof may be doped with P, S or a combination thereof. The carbon-based material, polymer, metal-containing inorganic material or a combination thereof may be mixed with a compound including P, S or a combination thereof.

The core 110 may be used as a template for the first fibrous sulfide-based solid electrolyte 100. The core 110 may have a high elastic modulus. The elastic modulus of the core 110 may be, for example, 1 MPa or more, 10 MPa or more, or 100 MPa or more. The elastic modulus of the core 110 may be, for example, 1 MPa to 1 GPa, 10 MPa to 1 GPa or 100 MPa to 1 GPa. When the core 110 has an elastic modulus within this range, the mechanical properties of the first fibrous sulfide-based solid electrolyte 100 can be further improved
The shell 120 may include, for example, a sulfide-based solid electrolyte, an oxide-based solid electrolyte, or a coating material. The coating material may be applied on part or all of the core 110. The coating material may provide, for example, water resistance, adhesion, or the like to the core 110.

The sulfide-based solid electrolyte and the oxide-based solid electrolyte may be selected from the solid electrolytes included in the core 110.

The coating material is not particularly limited, and any material that provides the first fibrous sulfide-based solid electrolyte 100 with properties necessary for a lithium battery, such as water resistance and bonding strength, may be used. The coating material may be, for example, a sulfide-based solid electrolyte substantially free of crosslinked sulfur and Li₂S. The coating material may be a composition including only Li₂S and a compound including an element of Group 14 to 15 of the Periodic Table of Elements, such as P, Si, Ge, or the like. The content of Li₂S in the composition including only Li₂S and P₂S₅ may be 70% to 85%. The content of Li₂S in the composition including only Li₂S and SiS₂ may be 50% to 80%. The content of Li₂S in the composition including only Li₂S and GeS₂ may be 50% to 80%. In the above-described composition, a cross-linked sulfur peak may not be observed in the Raman spectrum, and a Li₂S peak may not be observed in the XRD spectrum. Since the sulfide-based solid electrolyte has the above-described molar fraction, the amount of hydrogen sulfide generated may be reduced. Since the sulfide-based solid electrolyte does not include cross-linked sulfur and does not include Li₂S, the amount of hydrogen sulfide generated may be reduced. The sulfide-based solid electrolyte may be sulfide glass.

The coating material may be, for example, a sulfide-based solid electrolyte including crystallized glass having a composition of yLi₂S- (100-x-y)P₂S₅.xP₂O₅ (0<x<25 and 67<y<80). Since this crystallized glass has an ortho composition, stability against water can be improved, and the amount of hydrogen sulfide generated can be reduced. The ortho generally refers to a product having the highest hydration degree among oxo acids obtained by hydration of the same oxide. In the sulfide-based solid electrolyte of Li₂S-P₂S₅, the crystal composition in which the largest amount of Li₂S is added to P₂S₅, that is, Li₃PS4, corresponds to an ortho composition. Since the molar fraction of Li₂S in 75 Li₂S - 25 P₂S₅ is 75%, the sulfide-based solid electrolyte has an ortho composition, and thus may not substantially include crosslinked sulfur. The crosslinked sulfur is, for example, sulfur that crosslinks two phosphorus atoms in S₃P-S-PS₃, which is formed by the reaction of Li₂S and P₂S₅. This crosslinked sulfur easily react with water and easily generate hydrogen sulfide. That the sulfide-based solid electrolyte substantially does not contain cross-linked sulfur may be confirmed, for example, by measurement of Raman spectrum. In the Raman spectroscopy spectrum, the peak of S₃P-S-PS₃ typically appears at 402 cm⁻¹. In the Raman spectroscopy spectrum of the sulfide-based solid electrolyte, the peak at 402 cm-1 may not be detected at all. In the Raman spectrum of the sulfide-based solid electrolyte, a peak (417 cm⁻¹) representing PS₄³⁻ may be confirmed.

The coating material may include, for example, a binder. The binder may be, but is not limited to, for example, polyethylene, polypropylene, polytetrafluoroethylene (PTFE), polyvinylidene fluoride (PVdF), styrene-butadiene rubber, a tetrafluoroethylene-perfluoroalkyl vinyl ether copolymer, a vinylidene fluoride-hexafluoropropylene copolymer, a vinylidene fluoride-chlorotrifluoroethylene copolymer, an ethylene-tetrafluoroethylene copolymer, a polychlorotrifluoroethylene, a vinylidene fluoride-pentafluoropropylene copolymer, a propylene-tetrafluoroethylene copolymer, an ethylene-chlorotrifluoroethylene copolymer, a vinylidene fluoride-hexafluoropropylene-tetrafluoroethylene copolymer, a vinylidene fluoride-perfluoromethyl vinyl ether-tetrafluoro ethylene copolymer, an ethylene-acrylic acid copolymer, or a combination thereof. Anything that can be used as a binder in the art may be used.

At least one of the core 110 and the shell 120 may include a sulfide-based solid electrolyte. Since at least one of the core 110 and the shell 120 includes a sulfide-based solid electrolyte, excellent ionic conductivity and mechanical properties can be provided simultaneously.

The core 110 may include, for example, fibrous nanostructures, that is, one-dimensional nanostructures. Since the core 110 includes one-dimensional nanostructures, the shell 120 disposed on the core 110 may easily have a one-dimensional structure.

Examples of the one-dimensional nanostructures may include, but are not necessarily limited to, carbon nanofibers, carbon nanorods, carbon nanotubes, carbon nanoneedles, carbon nanowires, SiO₂, TiO₂, Al₂O₃, AIN, SiC, BaTiO₃ or a combination thereof, and any one-dimensional nanostructures that is used in the art may be used.

Since the first fibrous sulfide-based solid electrolyte 100 includes such one-dimensional nanostructures, an ion conduction path is extended within the lithium battery including the first fibrous sulfide-based solid electrolyte 100, a change in the volume of the cathode active material during charging and discharging of the lithium battery can be accommodated more effectively, and the ion conduction path within the lithium battery can be maintained despite the change in the volume of the cathode active material. As a result, the deterioration of the lithium battery can be further suppressed, and the cycle characteristics of the lithium battery can be further improved.

Referring to FIGS. 2 to 5, the ratio of the first diameter D1 of the core 110 and the first thickness T1 of the shell 120 may be, for example, 1:0.01 to 1:1000, 1:0.1 to 1:100, 1:0.1 to 1:10, 1:0.5 to 1:5, 1:1 to 1:4, 1:1 to 1:3, or 1:1 to 1:2. The ratio of the first length L1 of the core 110 and the second length L2 of the shell 120 may be 1:1 to 1:10, 1:1.01:1:5, 1.01:1:2, 1:1.03 to 1:1.5, 1:1.05 to 1:1.3, or 1:1.05 to 1:1.1.

Since the core 110 and shell 120 of the first fibrous sulfide-based solid electrolyte 100 has a thickness ratio and length ration within these ranges, an ion conduction path is extended within the lithium battery including the first fibrous sulfide-based solid electrolyte 100, a change in the volume of the cathode active material during charging and discharging of the lithium battery can be accommodated more effectively, and the ion conduction path within the lithium battery can be maintained despite the change in the volume of the cathode active material. As a result, the deterioration of the lithium battery can be further suppressed, and the cycle characteristics of the lithium battery can be further improved.

Although not shown in the drawings, the core 110 may have a multilayer structure. Since the core 110 has a multilayer structure, the shape, properties, and the like of the core 110 may be more diversely controlled. The core 110 may have, for example, a two-layer structure, a three-layer structure, or a four-layer structure. The respective layers of the core 110 having a multilayer structure may include the same or different materials.

Although not shown in the drawings, the shell 120 may have a multilayer structure. Since the shell 120 has a multilayer structure, the shape, properties, and the like of the shell 120 may be more diversely controlled. The shell 120 may have, for example, a two-layer structure, a three-layer structure, or a four-layer structure. The respective layers of the shell 120 having a multilayer structure may include the same or different materials.

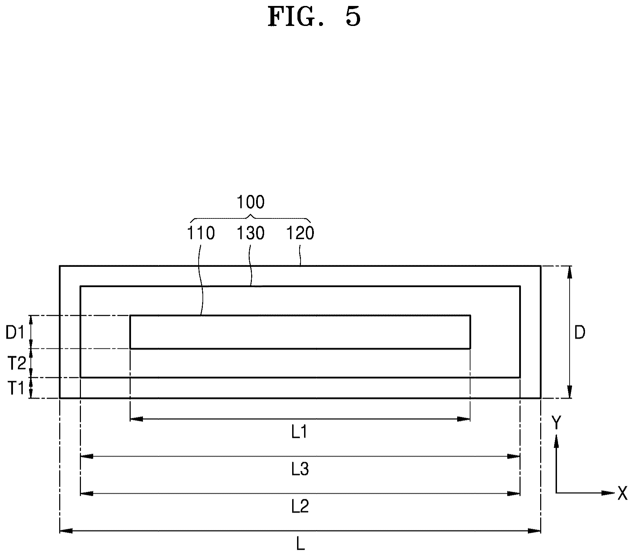

Referring to FIG. 5, the first fibrous sulfide-based solid electrolyte 100 may further include an interlayer 130 between the core 110 and the shell 120. Since the first fibrous sulfide-based solid electrolyte 100 further includes an interlayer 130, the binding strength between the core 110 and the shell 120 can be improved, and the structural stability of the core 110 and the shell 120 can be improved. The interlayer 130 may be omitted.

The interlayer 130 may have a second thickness T2 and a third length L3. The third length L3 of the interlayer 130 may be greater than the first length L1 of the core 110 and may be smaller than the second length L2 of the shell 120. The third length L3 of the interlayer 130 may be, for example, 101 % to 150 %, 101 % to 120 %, or 101 % to 110 % of the first length L1 of the core 110. The second thickness T2 of the interlayer 130 may be, for example, 1% to 50%, 1% to 20%, or 1% to 10% of the first diameter D1 of the core 110. The material of the inter layer 130 may be selected from the material used for the core 110 and the material used for the shell 120. The material of the interlayer may be, for example, a polymer.

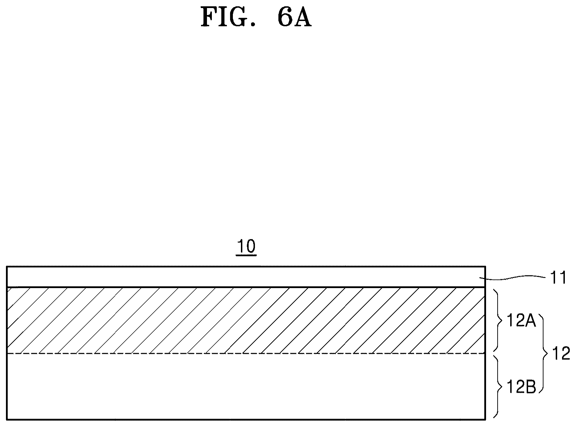

Referring to FIG. 6A and FIGS. 7 to 11, the cathode layer 10 includes a cathode current collector 11 and a cathode active material layer 12, and the cathode active material layer 12 includes a first region 12A adjacent to the cathode current collector 11 and a second region 12B adjacent to the solid electrolyte layer 30. For example, the first fibrous sulfide-based solid electrolyte 100 may be provided in the first region 12A and may be absent (free) in the second region 12B. The thickness of the first region 12A may be 50% or less, 40% or less, 30% or less, or 20% or less of the total thickness of the cathode active material layer 12. The first fibrous sulfide-based solid electrolyte 100 may be uniformly distributed in the first region 12A. Alternatively, the first fibrous sulfide-based solid electrolyte 100 may have a concentration gradient that decreases in the first region 12A in a direction from the cathode current collector 11 toward the solid electrolyte layer 30. Since the first fibrous sulfide-based solid electrolyte 100 is provided in the first region 12A and is absent (free) in the second region 12B, a long-distance ion conduction path is more easily formed in the first region 12A having an increased distance from the cathode layer, thereby performing the conduction of lithium ions into the cathode active material layer 12 more easily. Accordingly, the increase in internal resistance during charging and discharging of the lithium battery can be suppressed, and the cycle characteristics of the lithium battery can be further improved.

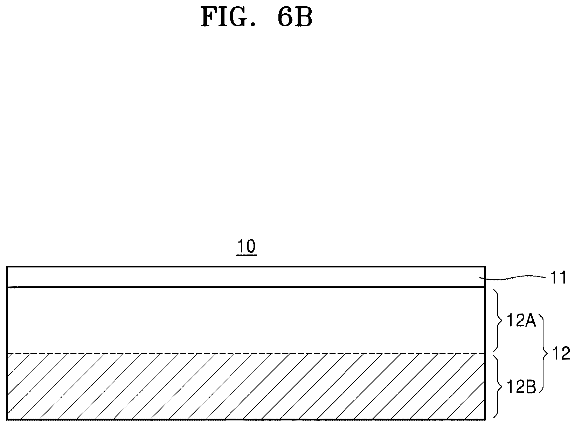

Referring to FIG. 6B and FIGS. 7 to 11, the cathode layer 10 includes a cathode current collector 11 and a cathode active material layer 12, and the cathode active material layer 12 includes a first region 12A adjacent to the cathode current collector 11 and a second region 12B adjacent to the solid electrolyte layer 30. For example, the first fibrous sulfide-based solid electrolyte 100 may be provided in the second region 12B and may be absent (free) in the first region 12A. The thickness of the second region 12B may be 50% or less, 40% or less, 30% or less, or 20% or less of the total thickness of the cathode active material layer 12. The first fibrous sulfide-based solid electrolyte 100 may be uniformly distributed in the second region 12B. Alternatively, the first fibrous sulfide-based solid electrolyte 100 may have a concentration gradient that decreases in the second region 12B in a direction from the solid electrolyte layer 30 toward the cathode current collector 11. Since the first fibrous sulfide-based solid electrolyte 100 is provided in the second region 12B adjacent to the solid electrolyte layer 30, the interfacial resistance between the electrolyte layer 30 and the cathode active material layer 12 is more effectively reduced, and the conduction of lithium ions from the solid electrolyte layer 30 into the cathode active material layer 12 can be more easily performed. Accordingly, the increase in internal resistance during charging and discharging of the lithium battery can be suppressed, and the cycle characteristics of the lithium battery can be further improved.

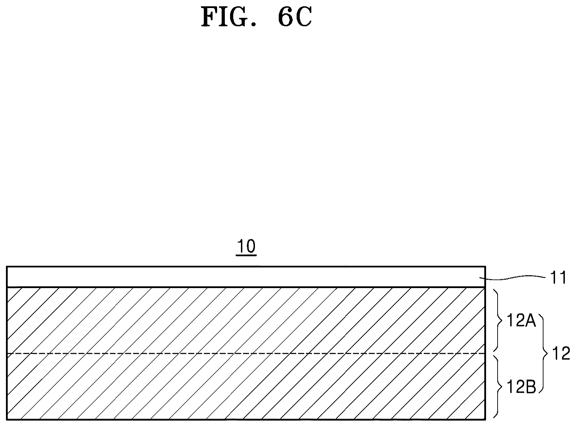

Referring to FIG. 6C and FIGS. 7 to 11, the cathode layer 10 includes a cathode current collector 11 and a cathode active material layer 12, and the cathode active material layer 12 includes a first region 12A adjacent to the cathode current collector 11 and a second region 12B adjacent to the solid electrolyte layer 30. For example, the first fibrous sulfide-based solid electrolyte 100 may be provided in the first region 12A and the second region 12B. Since the first fibrous sulfide-based solid electrolyte 100 is provided in both the first region 12A and the second region 12B, the ionic conductivity of the cathode active material layer 12 can be improved overall. The first fibrous sulfide-based solid electrolyte 100 may be uniformly provided throughout the first region 12A and the second region 12B. The first fibrous sulfide-based solid electrolyte 100 may have a concentration gradient that decreases throughout the first region 12A and the second region 12B in a direction from the cathode current collector 11 toward the solid electrolyte layer 30. The first fibrous sulfide-based solid electrolyte 100 may have a concentration gradient that decreases throughout the first region 12A and the second region 12B in a direction from the solid electrolyte layer 30 toward the cathode current collector 11.

Referring to FIGS. 6A to 6C and FIGS. 7 to 11, the content of the first fibrous sulfide-based solid electrolyte 100 may be, for example, 1 wt% to 50 wt%, 1 wt% to 40 wt%, 5 wt% to 40 wt%, 10 wt% to 40 wt%, 15 wt% to 40 wt%, 20 wt% to 40 wt%, or 25 wt% to 40 wt% of the total weight of the cathode active material layer 12. The content of the first fibrous sulfide-based solid electrolyte 100 may be, for example, 1 wt% to 30 wt%, 1 wt% to 25 wt%, 1 wt% to 20 wt%, 1 wt% to 10 wt%, or 1 wt% to 5 wt% of the total weight of the cathode active material layer 12. Since the cathode active material layer 12 has the content of the first fibrous sulfide-based solid electrolyte 100 within this range, an ion conduction path is extended within the lithium battery including the first fibrous sulfide-based solid electrolyte 100, a change in the volume of the cathode active material during charging and discharging of the lithium battery can be accommodated more effectively, and the ion conduction path within the lithium battery can be maintained despite the change in the volume of the cathode active material. As a result, the deterioration of the lithium battery can be further suppressed, and the cycle characteristics of the lithium battery can be further improved. When the content of the first fibrous sulfide-based solid electrolyte 100 is too high, the filling between the first fibrous sulfide-based solid electrolytes 100 within the cathode active material layer 12 may be incomplete, thereby increasing the interfacial resistance.

The cathode active material layer 12 may further include an irregularly shaped sulfide-based solid electrolyte that is distinct from the first fibrous sulfide-based solid electrolyte 100. The aspect ratio of the irregularly shaped sulfide-based solid electrolyte may be less than 2, 1.5 or less, or 1.3 or less. The particle size of the irregularly shaped sulfide-based solid electrolyte may be, for example, 0.1 µm to 50 µm, 0.1 µm to 50 µm, 0.1 µm to 30 µm, 0.1 µm to 20 µm, 0.1 µm to 10 µm, 0.1 µm to 5 µm, or 0.1 µm to 3 µm. The weight ratio of the first fibrous sulfide-based solid electrolyte 100 and the irregularly shaped sulfide-based solid electrolyte may be, for example, 1:99 to 99:1, 5:95 to 95:5, 10:90 to 90:10, 20:80 to 80:20, or 30:70 to 70:30. The weight ratio of the first fibrous sulfide-based solid electrolyte 100 and the irregularly shaped sulfide-based solid electrolyte may be, for example, 1:99 to 50:50, 3:97 to 40:60, 5:95 to 30:70, 5:95 to 25:75, or 5:95 to 20:80. Since the weight ratio of the first fibrous sulfide-based solid electrolyte 100 and the irregularly shaped sulfide-based solid electrolyte is within this range, the deterioration of the lithium battery can be further suppressed, and the cycle characteristics of the lithium battery can be further improved.

The size of the solid electrolyte included in the cathode active material layer 12 may be smaller than the size of the solid electrolyte included in the solid electrolyte layer 30. For example, the D50 average particle size of the solid electrolyte included in the cathode active material layer 12 may be 90% or less, 80% or less, 70% or less, 60% or less, 50% or less, 40% or less, 30% or less, or 20% or less of the D50 average particle size of the solid electrolyte included in the solid electrolyte layer 30. The D50 average particle size is a median particle diameter (D50). The median particle diameter (D50) is a size of the particle corresponding to a cumulative volume of 50%, calculated from the side of a particle having a smaller particle size in the size distribution of particles, as measured, for example, by laser diffraction. The particle size of the sulfide-based solid electrolyte may be measured by using, for example, a laser diffraction method or a dynamic light scattering method. The particle size is measured by using, for example, a laser scattering particle size distribution meter (e.g., Horiba LA-920), and is a value of the median particle diameter (D50) when 50% of small particles are accumulated in volume conversion. Alternatively, the particle size of the sulfide-based solid electrolyte may be measured from scanning electron microscope (SEM) images or optical microscopes.

### [Cathode layer: Cathode active material]

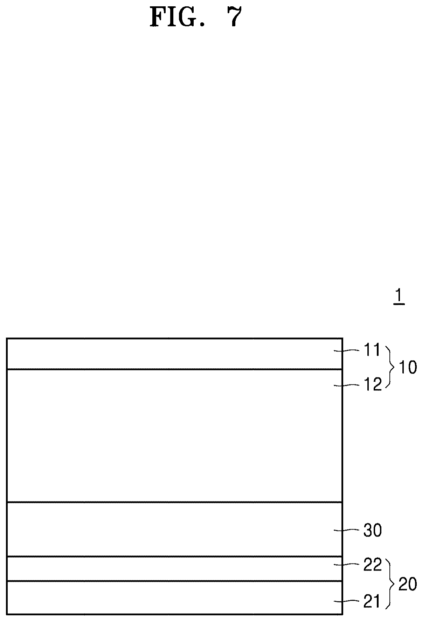

Referring to FIGS. 7 to 11, the cathode active material layer 12 includes, for example, a cathode active material.

The cathode active material included in the cathode active material layer 12 is a cathode active material capable of reversibly absorbing and desorbing lithium ions. The cathode active material includes, for example, an oxide-based cathode active material, a sulfide-based cathode active material, or a combination thereof.

The oxide-based cathode active material includes, for example, a lithium transition metal oxide, a metal oxide, or a combination thereof. The lithium transition metal oxide includes, for example, lithium cobalt oxide, lithium nickel oxide, lithium nickel cobalt oxide, lithium nickel cobalt aluminum oxide, lithium nickel cobalt manganese oxide, lithium manganate, lithium iron phosphate, or a combination thereof. The metal oxide includes, for example, iron oxide, vanadium oxide, or a combination thereof.

The sulfide-based cathode active material includes, for example, nickel sulfide, copper sulfide, Li₂S, a Li₂S-containing composite, or a combination thereof.

The oxide-based cathode active material may be, for example, at least one composite oxide of lithium and a metal selected from cobalt, manganese, nickel, and a combination thereof. The oxide-based cathode active material may include, for example, a compound represented by any one of the following formulae: LiₐA_{1-b}B'_{b}D₂ (where 0.90 ≤ a ≤ 1, 0 ≤ b ≤ 0.5); LiₐE_{1-b}B'_{b}O_{2-c}D_{c} (where 0.90 ≤ a ≤ 1, 0 ≤ b ≤ 0.5, 0 ≤ c ≤ 0.05); LiE_{2-b}B'_{b}O_{4-c}D_{c} (where 0 ≤ b ≤ 0.5, 0 ≤ c ≤ 0.05); LiₐNi_{1-b-c}CO_{b}B'_{c}D*_{α}* (where 0.90 ≤ a ≤ 1, 0 ≤ b ≤ 0.5, 0 ≤ c ≤ 0.05, 0 < α ≤ 2); LiₐNi_{1-b-c}Co_{b}B'_{c}O_{2-*α*}F'*_{α}* (where 0.90 ≤ a ≤ 1, 0 ≤ b ≤ 0.5, 0 ≤ c ≤ 0.05, 0 < α < 2); LiₐNi_{1-b-c}CO_{b}B'_{c}O₂ (where 0.90 ≤ a ≤ 1, 0 ≤ b ≤ 0.5, 0 ≤ c ≤ 0.05); LiₐNi_{1-b-c}Mn_{b}B'_{c}D*_{α}* (where 0.90 ≤ a ≤ 1, 0 ≤ b ≤ 0.5, 0 ≤ c ≤ 0.05, 0 < α ≤ 2); LiₐNi_{1-b-c}Mn_{b}B'_{c}O_{2-*α*}F'*_{α}* (where 0.90 ≤ a ≤ 1, 0 ≤ b ≤ 0.5, 0 ≤ c ≤ 0.05, 0 < α < 2); LiₐNi_{1-b-c}Mn_{b}B'_{c}O₂ (where 0.90 ≤ a ≤ 1, 0 ≤ b ≤ 0.5, 0 ≤ c ≤ 0.05); LiₐNi_{b}E_{c}G_{d}O₂ (where 0.90 ≤ a ≤ 1, 0 ≤ b ≤ 0.9, 0 ≤ c ≤ 0.5, 0.001 ≤ d ≤ 0.1); LiₐNi_{b}Co_{c}Mn_{d}GₑO₂ (where 0.90 ≤ a ≤ 1, 0 ≤ b ≤ 0.9, 0 ≤ c ≤ 0.5, 0 ≤ d ≤ 0.5, 0.001 ≤ e ≤ 0.1); LiₐNiG_{b}O₂ (where 0.90 ≤ a ≤ 1, 0.001 ≤ b ≤ 0.1); LiₐCoG_{b}O₂ (where 0.90 ≤ a ≤ 1, 0.001 ≤ b ≤ 0.1); LiₐMnGeO₂ (where 0.90 ≤ a ≤ 1, 0.001 ≤ b ≤ 0.1); LiaMn2GbO4 (where 0.90 ≤ a ≤ 1, 0.001 ≤ b ≤ 0.1); LiV₂O₅; LiI'O₂; LiNiVO₄; Li_{(3-f)}J₂(PO₄)₃ (0 ≤ f ≤ 2); Li_{(3-f)}Fe₂(PO₄)₃ (0 ≤ f ≤ 2); and LiFePO₄.

In the formulae representing the above-described compound, A is Ni, Co, Mn, or a combination thereof; B' is Al, Ni, Co, Mn, Cr, Fe, Mg, Sr, V, a rare earth element, or a combination thereof; D is O, F, S, P, or a combination thereof; E is Co, Mn, or a combination thereof; F' is F, S, P, or a combination thereof; G is Al, Cr, Mn, Fe, Mg, La, Ce, Sr, V, or a combination thereof; Q is Ti, Mo, Mn, or a combination thereof; I' is Cr, V, Fe, Sc, Y, or a combination thereof; J is V, Cr, Mn, Co, Ni, Cu, or a combination thereof. It is also possible to use a compound having a coating layer applied to the surface of the above-described compound, and it is also possible to use a mixture of the above-described compound and a compound having a coating layer applied thereto. The coating layer applied to the surface of the above-described compound includes a coating element compound, for example, an oxide of a coating element, a hydroxide of a coating element, an oxyhydroxide of a coating element, an oxycarbonate of a coating element, or a hydroxycarbonate of a coating element. The compound forming this coating layer is amorphous or crystalline. The coating element included in the coating layer includes Mg, Al, Co, K, Na, Ca, Si, Ti, V, Sn, Ge, Ga, B, As, Zr, or a mixture thereof. The method of forming the coating layer is selected within a range that does not adversely affect the properties of the cathode active material. Coating methods include spray coating, dipping, and the like. Since a specific coating method is well understood by those skilled in the art, a detailed description thereof will be omitted.

The oxide-based cathode active material may include, for example, a lithium transition metal oxide represented by Formulae 1 to 8 below:

<Formula 1 > LiₐNiₓCo_{y}M_{z}O_{2-b}A_{b}

in Formula 1,
1.0≤a≤1.2, 0≤b≤0.2, 0.8≤x<1, 0≤y≤0.3, 0<z≤0.3, and x+y+z=1,
M is manganese (Mn), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminum (Al), boron (B), or a combination thereof, and
A is F, S, Cl, Br, or a combination thereof,

   <Formula 2> LiNiₓCo_{y}Mn_{z}O₂

   <Formula 3> LiNiₓCo_{y}Al_{z}O₂
in Formulae 2 and 3, 0.8≤x≤0.95, 0≤y≤0.2, 0<z≤0.2, and x+y+z=1,

   <Formula 4> LiNiₓCo_{y}Mn_{z}Al_{w}O₂
in Formula 4, 0.8≤x≤0.95, 0≤y≤0.2, 0<z≤0.2, 0<w≤0.2, and x+y+z+w=1,

   <Formula 5> LiₐCoₓM_{y}O_{2-b}A_{b}
in Formula 5,
1.0≤a≤1.2, 0≤b≤0.2, 0.9≤x≤1, 0≤y≤0.1, and x+y=1,
M is manganese (Mn), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminum (Al), boron (B), or a combination thereof, and
A is F, S, Cl, Br, or a combination thereof,

   <Formula 6> LiₐNiₓMn_{y}M'_{z}O_{2-b}A_{b}
in Formula 6,
1.0≤a≤1.2, 0≤b≤0.2, 0<x≤0.3, 0.5≤y<1, 0<z≤0.3, and x+y+z=1,
M' is cobalt (Co), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminum (Al), boron (B), or a combination thereof, and
A is F, S, Cl, Br, or a combination thereof,

   <Formula 7> LiₐM1ₓM2_{y}PO_{4-b}X_{b}
In Formula 7, 0.90≤a≤1.1, 0≤x≤0.9, 0≤y≤0.5, 0.9<x+y<1.1, 0≤b≤2,
M1 is chromium (Cr), manganese (Mn), iron (Fe), cobalt (Co), nickel (Ni), copper (Cu), zirconium (Zr), or a combination thereof, and
M2 is magnesium (Mg), calcium (Ca), strontium (Sr), barium (Ba), titanium (Ti), zinc (Zn), boron (B), niobium (Nb), gallium (Ga), indium (In), molybdenum (Mo), tungsten (W), aluminum (Al), silicon (Si), chromium (Cr), vanadium (V), scandium (Sc), yttrium (Y), or a combination thereof, and X is O, F, S, P, or a combination thereof.

   <Formula 8> LiₐM3_{z}PO₄
In Formula 8, 0.90≤a≤1.1 and 0.9≤z≤1.1, and
M3 is chromium (Cr), manganese (Mn), iron (Fe), cobalt (Co), nickel (Ni), copper (Cu), zirconium (Zr), or a combination thereof.

The oxide-based cathode active material may be covered by a coating layer. The coating layer may be any layer known as a coating layer of a cathode active material of an all-solid-state secondary battery. The coating layer is, for example, Li₂O-ZrO₂ (LZO) or the like.

The size of the oxide-based cathode active material may be, for example, 0.1 µm to 30 µm, 0.5 µm to 20 µm, or 1 µm to 15 µm. The oxide-based cathode active material may be, for example, a single crystal particle or a polycrystalline particle.

The sulfide-based cathode active material may include, for example, a Li₂S-containing composite. The Li₂S-containing composite includes a composite of Li₂S and carbon, a composite of Li₂S, carbon, and a solid electrolyte, a composite of Li₂S and a solid electrolyte, a composite of Li₂S and a lithium salt, a composite of Li₂S, a lithium salt, and carbon, a composite of Li₂S and a metal carbide, a composite of Li₂S, carbon, and a metal carbide, a composite of Li₂S and a metal nitride, a composite of Li₂S, carbon, and a metal nitride, or a combination thereof.

The composite of Li₂S and carbon includes carbon. The carbon may be, for example, any material containing carbon atoms that can be used as a conductive material in the relevant technical field. The carbon may be, for example, crystalline carbon, amorphous carbon, or a combination thereof. The carbon may be, for example, a calcined material of a carbon precursor. The carbon may be, for example, carbon nanostructures. The carbon nanostructures may be, for example, one-dimensional carbon nanostructures, two-dimensional carbon nanostructures, three-dimensional carbon nanostructures, or combinations thereof. The carbon nanostructures may be, for example, carbon nanotubes, carbon nanofibers, carbon nanobelts, carbon nanorods, graphene, graphene oxide (GO), reduced graphene oxide (rGO), graphene balls (GB), or combinations thereof. The carbon may be, for example, porous carbon or non-porous carbon. The porous carbon may, include, for example, periodic and regular two-dimensional or three-dimensional pores. The porous carbon may be carbon black, such as ketjen black, acetylene black, denka black, thermal black, channel black; graphite, activated carbon, or a combination thereof. The form of carbon may include, but is not limited to, a particle form, a sheet form, a fiber form, etc., and any form that can be used as carbon in the relevant technical field is possible. The method of preparing a composite of Li2S and carbon may be, but is not limited to, a dry method, a wet method, or a combination thereof. In the relevant technical field, methods of preparing a composite of Li2S and carbon include, but are not necessarily limited to, milling, heat treatment, and deposition, and any method used in the relevant technical field may be used.

The composite of Li₂S, carbon, and a solid electrolyte includes carbon and a solid electrolyte. The carbon refers to the above-described composite of Li₂S and carbon. The solid electrolyte is, for example, an amorphous solid electrolyte, and any solid electrolyte that is used as an ion-conducting material in the relevant technical field may be used. The solid electrolyte is, for example, an inorganic solid electrolyte. The solid electrolyte is, for example, a crystalline solid electrolyte, an amorphous solid electrolyte, or a combination thereof. The solid electrolyte is, for example, a sulfide-based solid electrolyte, an oxide-based solid electrolyte, or a combination thereof. The sulfide-based solid electrolyte includes, for example, Li, S, and P, and may optionally further include a halogen element. The sulfide-based solid electrolyte may be selected from the sulfide-based solid electrolytes used in the solid electrolyte layer. The sulfide-based solid electrolyte may have, for example, an ionic conductivity of 1×10⁻⁵ S/cm or more at room temperature. The sulfide-based solid electrolyte may include, for example, at least one selected from Li₃PO₄-Li₂SO₄, Li₂S-P₂S₅, Li₂S-P₂S₅-LiX (where X is a halogen element), Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (where m and n are positive numbers, Z is one of Ge, Zn, and Ga), Li₂S-GeS₂, Li₂S-SiS₂-Li₃PO₄, Li₂S-SiS₂-LiₚMO_{q}, (where p and q are positive numbers, and M is one of P, Si, Ge, B, Al, Ga, and In), Li₇₋ₓPS₆₋ₓClₓ (0≤x≤2), Li₇₋ₓPS₆₋ₓBrₓ (0≤x≤2), and Li₇₋ₓPS₆₋ₓIₓ (0≤x≤2). The oxide-based solid electrolyte includes, for example, Li, O, and a transition metal element, and may optionally include other elements. The oxide-based solid electrolyte may be, for example, a solid electrolyte having an ionic conductivity of 1×10⁵ S/cm or more at room temperature. The oxide-based solid electrolyte may be selected from the oxide-based solid electrolytes used in the solid electrolyte layer. The solid electrolyte may be, for example, a mixture of a sulfide-based solid electrolyte and a lithium salt. For example, the solid electrolyte may be a mixture of Li₃PO₄-Li₂SO₄ and a binary lithium salt or a mixture of Li₃PO₄-Li₂SO₄ and a ternary lithium salt.

The composite of Li2S and a solid electrolyte includes a solid electrolyte. The solid electrolyte refers to the above-described composite of Li₂S, carbon, a solid electrolyte.

The composite of Li₂S and a lithium salt includes a lithium salt compound. The lithium salt compound do not include, for example, a sulfur (S) atom. The lithium salt compound may be, for example, a binary compound composed of lithium and one element selected from groups 13 to 17 of the periodic table of elements. The binary compound may include, for example, at least one selected from LiF, LiCl, LiBr, Lil, LiH, Li₂S, Li₂O, Li₂Se, Li₂Te, Li₃N, Li₃P, Li₃As, Li₃Sb, LiI₃, and LiB₃. The lithium salt compound may be, for example, a ternary compound composed of lithium and two elements selected from groups 13 to 17 of the periodic table of elements. The ternary compound includes, for example, at least one selected from Li₃OCl, LiPF₆, LiBF₄, LiSbF₆, LiAsF₆, LiClO₄, LiAlO₂, LiAlCl₄, LiNO₃, Li₂CO₃, LiBH₄, Li₂SO₄, Li₃BO₃, Li₃PO₄, Li₄NCl, Li₅NCl₂, and Li₃BN₂. The lithium salt compound is particularly at least one lithium halide compound selected from LiF, LiCl, LiBr, and Lil. The composite of Li₂S and a solid electrolyte includes a solid electrolyte. The solid electrolyte refers to the above-described composite of Li₂S, carbon, a solid electrolyte. The composite of Li₂S and a solid electrolyte includes, for example, a composite of Li₂S and at least one lithium salt selected from LiF, LiCl, LiBr, Lil, LiH, Li₂S, Li₂O, Li₂Se, Li₂Te, Li₃N, Li₃P, Li₃As, Li₃Sb, LiI₃, and LiB₃.

The composite of Li₂S, a lithium salt, and carbon includes a lithium salt compound and carbon. The carbon refers to the above-described composite of Li₂S and carbon.

The composite of Li₂S and metal carbide includes metal carbide. The metal carbide is, for example, a two-dimensional metal carbide. The two-dimensional metal carbide is, for example, MXene. The two-dimensional metal carbide is expressed as, for example, Mₙ₊₁CₙTₓ (where M is a transition metal, T is a terminal group, T is O, OH, and/or F, n=1, 2, or 3, and x is the number of terminal groups). The two-dimensional metal carbide is, for example, Ti₂CTₓ, (Ti₀.5, Nb_{0.5})₂CTₓ, Nb₂CTₓ, V₂CTₓ, Ti₃C₂Tₓ, (V₀.5, Cr_{0.5})₃C₂Tₓ, Ti₃CNTₓ, Ta₄C₃Tₓ, Nb₄C₃Tₓ or a combination thereof. The surfaces of two-dimensional metal carbide are terminated with O, OH and/or F.

The composite of Li₂S, carbon, and metal carbide includes carbon and metal carbide. The carbon refers to the above-described composite of Li₂S and carbon. The metal carbide refers to the above-described composite of Li₂S and metal carbide.

The composite of Li₂S and metal nitride includes metal nitride. The metal nitride is, for example, two-dimensional metal nitride. The two-dimensional metal nitride is expressed as, for example, Mₙ₊₁NₙTₓ (where M is a transition metal, T is a terminal group, T is O, OH, and/or F, n=1, 2, or 3, and x is the number of terminal groups). The surfaces of two-dimensional metal nitride are terminated with O, OH and/or F.

The composite of Li₂S, carbon, and metal nitride includes carbon and metal nitride. The carbon refers to the above-described composite of Li₂S and carbon. The metal carbide refers to the above-described composite of Li₂S and metal nitride.

The Li₂S-containing composite may further include, for example, a second fibrous sulfide-based solid electrolyte (not shown). The Li₂S-containing composite may be a composite of Li₂S and a second fibrous sulfide-based solid electrolyte, or a composite of Li₂S and a second fibrous sulfide-based solid electrolyte and the above-described carbon, solid electrolyte, lithium salt, metal carbide, or metal nitride.

Since the Li₂S-containing composite includes a second fibrous sulfide-based solid electrolyte, the deterioration of the lithium battery can be further suppressed, and the cycle characteristics of the lithium battery can be further improved. The size of the second fibrous sulfide-based solid electrolyte may be smaller than the size of the first fibrous sulfide-based solid electrolyte 100. The length and/or thickness of the second fibrous sulfide-based solid electrolyte may be 50% or less, 40% or less, 30% or less, 20% or less, or 10% or less of the length and/or thickness of the first fibrous sulfide-based solid electrolyte 100, respectively. The length and/or thickness of the second fibrous sulfide-based solid electrolyte may be 0.1 % to 50 %, 0.5 % to 40 %, 1 % to 30 %, 1 % to 20 %, or 1 % to 10 % of the length and/or thickness of the first fibrous sulfide-based solid electrolyte 100, respectively. The second fibrous sulfide-based solid electrolyte may have the same shape as the first fibrous sulfide-based solid electrolyte100, and may have a smaller size than the first fibrous sulfide-based solid electrolyte100. Since the second fibrous sulfide-based solid electrolyte has reduced length and/or thickness, it may be easily distributed in the Li2S-containing composite. Since the second fibrous sulfide-based solid electrolyte has reduced length and/or thickness, the deterioration of the lithium battery can be further suppressed, and the cycle characteristics of the lithium battery can be further improved.

The size of the sulfide-based cathode active material may be, for example, 0.1 µm to 50 µm, 0.5 µm to 30 µm, 0.5 µm to 20 µm, or 1 µm to 10 µm. The size of Li₂S may be, for example, 1 nm to 10 µm, 10 nm to 5 µm, 10 nm to 3 µm or 10 nm to 1 µm. The size of the Li₂S-containing composite may be, for example, 0.1 µm to 50 µm, 0.5 µm to 30 µm, 0.5 µm to 20 µm, or 1 µm to 10 µm.

The cathode active material may be, for example, a composite cathode active material including a core absorbing and desorbing lithium and a shell disposed on the core.

The composite cathode active material includes, for example, a core absorbing and desorbing lithium; and a shell disposed on the core, wherein the shell includes at least one first metal oxide represented by Formula MₐO_{b} (0<a≤3, 0<b<4, when a is 1, 2, or 3, b is not an integer); and graphene, wherein the first metal oxide is disposed within a graphene matrix, and M is at least one metal selected from groups 2 to 13, 15, and 16 of the periodic table of elements. The core absorbing and desorbing lithium includes, for example, the above-described Li₂S-containing composite, wherein this Li₂S-containing composite includes, for example, a composite of Li₂S and carbon, a composite of Li₂S, carbon and a solid electrolyte, a composite of Li₂S and a solid electrolyte, a composite of Li₂S and a lithium salt, a composite of Li₂S, a lithium salt and carbon, a composite of Li₂S and a metal carbide, a composite of Li₂S, carbon and a metal carbide, a composite of Li₂S and a metal nitride, a composite of Li₂S, carbon and a metal nitride, or a combination thereof. The core absorbing and desorbing lithium may include, for example, a lithium transition metal oxide represented by Formulae 1 to 8. The core absorbing and desorbing lithium may include, for example, a lithium transition metal oxide having a Ni content of 80 mol% or more. For example, a shell including a first metal oxide and graphene is disposed on the core absorbing and desorbing lithium. Conventional graphene is difficult to coat uniformly on the core due to aggregation. In contrast, since a composite including a plurality of first metal oxides arranged in a graphene matrix is used as the composite cathode active material, the aggregation of graphene is prevented, and a uniform shell is disposed on the core. Therefore, a contact between the core and the electrolyte is effectively blocked, thereby preventing a side reaction due to the contact between the core and the electrolyte. Since the shell including graphene is flexible, the shell easily accommodates a change in the volume of the composite cathode active material during charging and discharging, thereby suppressing the occurrence of cracks in the composite cathode active material. Since graphene has high electronic conductivity, the interfacial resistance between the composite cathode active material and the electrolyte is reduced. Therefore, the internal resistance of the lithium battery is maintained or reduced despite the introduction of the shell including graphene. In addition, since the first metal oxide has a high voltage resistance, deterioration of the Li₂S-containing composite or lithium transition metal oxide included in the core can be prevented during charging and discharging at high voltage. As a result, the cycle characteristics and high-temperature stability of the lithium battery including the composite cathode active material are improved. The shell may include, for example, one type of first metal oxide or two or more different types of first metal oxides. The metal included in the first metal oxide may be, for example, at least one selected from Al, Nb, Mg, Sc, Ti, Zr, V, W, Mn, Fe, Co, Pd, Cu, Ag, Zn, Sb, and Se. The first metal oxide may be, for example, at least one selected from Al₂O_{z}(0<z<3), NbOₓ(0<x<2.5), MgOₓ(0<x<1), Sc₂O_{z}(0<z<3), TiO_{y}(0<y<2), ZrO_{y}(0<y<2), V₂O_{z}(0<z<3), WO_{y}(0<y<2), MnO_{y}(0<y<2), Fe₂O_{z}(0<z<3), Co₃O_{w}(0<w<4), PdOₓ(0<x<1), CuOₓ(0<x<1), AgOₓ(0<x<1), ZnOₓ(0<x<1), Sb₂O_{z}(0<z<3), and SeO_{y}(0<y<2). Since this first metal oxide is disposed in the graphene matrix, the uniformity of the shell disposed on the core is improved, and the voltage resistance of the composite cathode active material is further improved. For example, the shell includes Al₂Oₓ (0<x<3) as the first metal oxide. The shell may further include at least one second metal oxide represented by Formula MₐO_{c} (0<a≤3, 0<c≤4, when a is 1, 2, or 3, and c is an integer). M is at least one metal selected from groups 2 to 13, 15, and 16 of the periodic table of elements. For example, the second metal oxide includes the same metal as the first metal oxide, and the ratio (c/a) of a and c of the second metal oxide has a greater value than the ratio (b/a) of a and b of the first metal oxide. For example, c/a >b/a. The second metal oxide is selected from, for example, Al₂O₃, NbO, NbO₂, Nb₂O₅, MgO, Sc₂O₃, TiO₂, ZrO₂, V₂O₃, WO₂, MnO₂, Fe₂O₃, Co₃O₄, PdO, CuO, AgO, ZnO, Sb₂O₃, and SeO₂. The first metal oxide is a reduction product of the second metal oxide. The first metal oxide is obtained by the reduction of part or all of the second metal oxide. Therefore, the first metal oxide has a lower oxygen content and a higher oxidation number of metal than the second metal oxide. For example, the shell includes a first metal oxide, Al₂Oₓ (0<x<3), and a second metal oxide, Al₂O₃. The thickness of the shell is, for example, 1 nm to 5 µm, 1 nm to 1 µm, 1 nm to 500 nm, 1 nm to 200 nm, 1 nm to 100 nm, 1 nm to 90 nm, 1 nm to 80 nm, 1 nm to 70 nm, 1 nm to 60 nm, 1 nm to 50 nm, 1 nm to 40 nm, 1 nm to 30 nm, 1 nm to 20 nm, or 1 nm to 10 nm. Since the shell has a thickness within this range, an increase in internal resistance of a lithium battery including a composite cathode active material is suppressed. The average particle size of at least one selected from the first metal oxide and second metal oxide included in the composite may be 1 nm to 1 µm, 1 nm to 500 nm, 1 nm to 200 nm, 1 nm to 100 nm, 1 nm to 70 nm, 1 nm to 50 nm, 1 nm to 30 nm, 3 nm to 30 nm, 3 nm to 25 nm, 5 nm to 25 nm, 5 nm to 20 nm, or 7 nm to 20 nm. Since the first metal oxide and/or the second metal oxide may be more uniformly distributed in the graphene matrix of the composite by having particle sizes within a nano-range. Therefore, this composite may be uniformly applied on the core without aggregation to form a shell. Additionally, the first metal oxide and/or the second metal oxide may be more uniformly disposed on the core by having particle sizes within this range. Therefore, since the first metal oxide and/or the second metal oxide are uniformly disposed on the core, voltage resistance characteristics can be more effectively exhibited. The average particle size of the first metal oxide and the second metal oxide may be measured by using a measuring device using a laser diffraction method or a dynamic light scattering method. Alternatively, the particle sizes of the first metal oxide and the second metal oxide may be measured from a scanning electron microscope and a transmission electron microscope.

The shape of the cathode active material is, for example, a particle shape such as a perfect spherical shape or an elliptical spherical shape. The particle size of the cathode active material is not particularly limited and is within a range applicable to cathode active materials of conventional all-solid-state secondary batteries. The content of the cathode active material in the cathode layer 10 is not particularly limited and is within the range applicable to cathode layers of conventional all-solid-state secondary batteries. The content of the cathode active material included in the cathode active material layer 12 may be, for example, 10 wt% to 99 wt%, 10 wt% to 90 wt%, 10 wt% to 80 wt%, 10 wt% to 70 wt%, or 10 wt% to 50 wt% of the total weight of the cathode active material layer 12.

### [Cathode layer: conductive material]

The cathode active material layer 12 may further include a conductive material. The conductive material may be, for example, a carbon-based conductive material, a metal-based conductive material, or a combination thereof. The carbon-based conductive material may be, but is not limited to, graphite, carbon black, acetylene black, ketjen black, carbon fiber, or a combination thereof, and any material used as a carbon-based conductive material in the relevant technical field may be used. The metal-based conductive material may be, but is not limited to, metal powder, metal fiber, or a combination thereof, and any material used as a metal-based conductive material in the relevant technical field may be used. The content of the conductive material included in the cathode active material layer 12 may be, for example, 1 wt% to 30 wt%, 1 wt% to 20 wt%, or 1 wt% to 10 wt% of the total weight of the cathode active material layer 12.

### [Cathode layer: binder]

The cathode active material layer 12 may further include a binder. The binder may be, but is not limited to, styrene butadiene rubber (SBR), polytetrafluoroethylene, polyvinylidene fluoride, or polyethylene, and any binder used in the relevant technical field may be used. The content of the binder included in the cathode active material layer 12 may be, for example, 1 wt% to 10 wt% of the total weight of the cathode active material layer 12. The binder may be omitted.

### [Cathode layer: other additives]

The cathode active material layer 12 may further include additives such as a filler, a coating agent, a dispersant, and an ion conductive aid in addition to the above-described cathode active material, solid electrolyte, binder, and conductive material.

As the filler, coating agent, dispersant, and ion conductive aid that can be included in the cathode active material layer 12, known materials generally used in electrodes of all-solid-state secondary batteries may be used.

### [Cathode layer: cathode current collector]

As the cathode current collector 11, for example, a plate or foil made of indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof is used. The cathode current collector 11 may be omitted. The thickness of the cathode current collector 11 is, for example, 1 µm to 100 µm, 1 µm to 50 µm, 5 µm to 25 µm, or 10 µm to 20 µm.

The cathode current collector 11 may include, for example, a base film and a metal layer disposed on one or both surfaces of the base film. The base film may include, for example, a polymer. The polymer may be, for example, a thermoplastic polymer. The polymer may include, for example, polyethylene terephthalate (PET), polyethylene (PE), polypropylene (PP), polybutylene terephthalate (PBT), polyimide (PI), or a combination thereof. The base film may be, for example, an insulator. Since the base film includes an insulating thermoplastic polymer, when a short circuit occurs, the base film softens or liquefies, thereby blocking battery operation and suppressing a rapid increase in current. The metal layer may include, for example, indium (In), copper (Cu), magnesium (Mg), stainless steel, titanium (Ti), iron (Fe), cobalt (Co), nickel (Ni), zinc (Zn), aluminum (Al), germanium (Ge), or an alloy thereof. The metal layer acts as an electrochemical fuse and may thus be cut off in the event of overcurrent to prevent a short circuit. The limit current and maximum current may be controlled by adjusting the thickness of the metal layer. The metal layer may be plated or deposited on the base film. As the thickness of the metal layer decreases, the limit current and/or maximum current of the cathode current collector 11 decreases, so the stability of the lithium battery during a short circuit can be improved. A lead tab may be added to the metal layer for external connection. The lead tab may be welded to the metal layer or the metal layer/base film laminate by ultrasonic welding, laser welding, spot welding, or the like. During welding, while the base film and/or the metal layer melts, the metal layer may be electrically connected to the lead tab. To make the welding between the metal layer and the lead tab stronger, a metal chip may be added between the metal layer and the lead tab. The metal chip may be a thin piece of the same material as the metal of the metal layer. The metal chip may be, for example, a metal foil, a metal mesh, or the like. The metal chip may be, for example, aluminum foil, copper foil, SUS foil, or the like. Since the metal chip is disposed on the metal layer and then welded with the lead tab, the lead tab may be welded to a metal chip/metal layer laminate or a metal chip/metal layer/base film laminate. During welding, while the base film, the metal layer, and/or the metal chip melts, the metal layer or the metal layer/metal chip laminate may be electrically connected to the lead tab. a metal chip and/or a lead tab may be added onto a portion of the metal layer. The thickness of the base film may be, for example, 1 µm to 50 µm, 1.5 µm to 50 µm, 1.5 µm to 40 µm, or 1 µm to 30 µm. Since the base film has a thickness within this range, the weight of an electrode assembly may be reduced more effectively. The melting point of the base film may be, for example, from 100 °C to 300 °C, 100 °C to 250 °C, or 100 °C to 200 °C. Since the base film has a melting point within this range, the base film melts during the process of welding the lead tab, and may thus be easily bonded to the lead tab. Surface treatment, such as corona treatment, may be performed on the base film to improve adhesion between the base film and the metal layer. The thickness of the metal layer may be, for example, 0.01 µm to 3 µm, 0.1 µm to 3 µm, 0.1 µm to 2 µm, or 0.1 µm to 1 µm. Since the metal layer has a thickness within this range, the stability of an electrode assembly may be secured while maintaining conductivity. The thickness of the metal chip may be, for example, 2 µm to 10 µm, 2 µm to 7 µm, or 4 µm to 6 µm. Since the metal piece has a thickness within this range, the connection between the metal layer and the lead tab may be performed more easily. Since the cathode current collector 11 has this structure, the weight of the cathode may be reduced, and as a result, the energy density of the cathode and the lithium battery may be improved.

### [Cathode layer: inactive member]

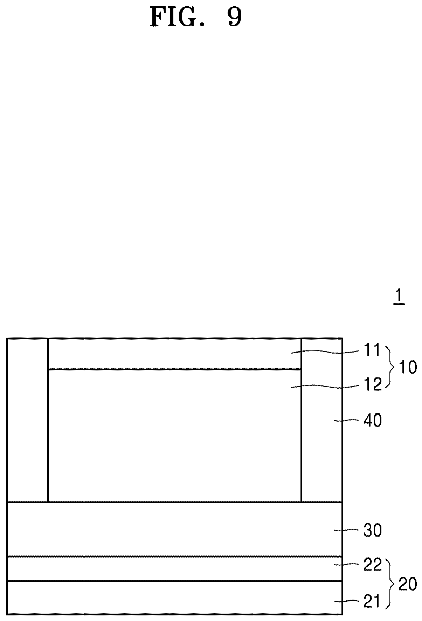

Referring to FIGS. 9 to 11, the cathode 10 includes a cathode current collector 11 and a cathode active material layer 12 disposed on one surface of the cathode current collector 11, and further includes an inactive member 40, 40a, 40b disposed on one side surface of the cathode layer 10.

Since the cathode 10 includes the inactive member 40, cracks of the solid electrolyte layer 30 is prevented during the manufacturing and/or charging and discharging of the all-solid-state secondary battery 1, resulting in improved cycle characteristics of the all-solid-state secondary battery 1. In the all-solid-state secondary battery 1 that does not include the inactive member 40, when manufacturing and charging and/or discharging the all-solid-state secondary battery 1, uneven pressure is applied to the solid electrolyte layer 30 in contact with the cathode 10, thereby increasing the possibility of a short circuit occurring due to cracks occurring in the solid electrolyte layer 30 and the growth of lithium metal through the cracks.

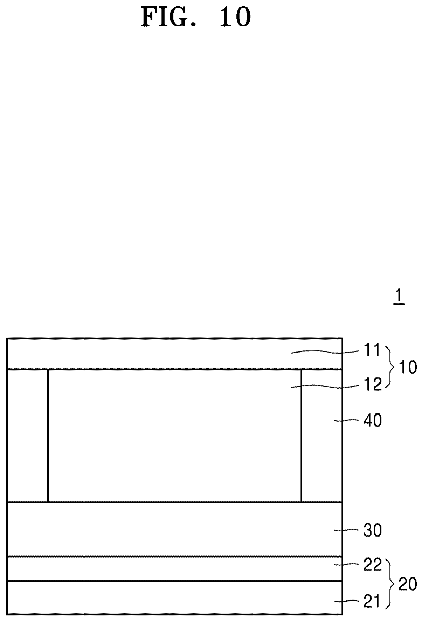

The inactive member 40 is disposed to surround the cathode layer 10 along the side surface of the cathode layer 10. The inactive member 40 surrounds part or all of the side surface of the cathode 10 and comes into contact with the solid electrolyte layer 30. Since the inactive member 40 surrounds the side surface of the cathode 10 and comes into contact with the solid electrolyte layer 30, cracks of the solid electrolyte layer 30 that occur due to a pressure difference during the pressing process in the solid electrolyte layer 30 that does not come into contact with the cathode 10 can be effectively suppressed. The inactive member 40 surrounds the side surface of the cathode 10 and is separated from the anode 20, more specifically, the first anode active material layer 22. The inactive member 40 surrounds the side surface of the cathode 10, comes into contact with the solid electrolyte layer 30, and is separated from the anode 20. Accordingly, the possibility of a short circuit occurring due to the physical contact between the cathode 10 and the first anode active material layer 22 or due to the overcharging of lithium is suppressed. Referring to FIG. 9, the inactive member 40 is disposed on one side surface of the cathode active material layer 12 and, at the same time, is disposed on one surface of the cathode current collector 11, thereby more effectively suppressing the possibility of a short circuit occurring due to the contact between the cathode current collector 11 and the anode 20. Alternatively, referring to FIG. 10, the inactive member 40 is disposed on one side surface of the cathode active material layer 12 and is disposed between the solid electrolyte layer 30 and the cathode current collector 11 facing the solid electrolyte layer 30 The inactive member 40 is not disposed on one surface of the cathode current collector 11. Since the inactive member 40 is disposed between the cathode current collector 11 and the solid electrolyte layer 30, a short circuit due to the contact between the cathode current collector 11 and the anode 20 can be effectively prevented.

Although not shown in the drawings, part or all of the inactive member 40, 40a, 40b may be disposed to be spaced apart from the side surface of the cathode layer 10. Since part or all of the inactive member 40, 40a, 40b is disposed to be spaced apart from the side surface of the cathode layer 10, the manufacturing process of the all-solid-state secondary battery 1 may be performed more easily, and the manufacturing speed of the all-solid-state secondary battery 1 may be increased. Since part or all of the inactive member 40, 40a, 40b is disposed to be spaced apart from the side surface of the cathode layer 10, the lifespan characteristics of the all-solid-state secondary battery 1 can be further improved by more effectively accommodating the volume change in the side surface direction of the cathode layer 10 during charging and discharging. The distance between the inactive member 40, 40a, 40b and the side surface of the cathode layer 10 is independently, for example, 0.1 µm to 10 mm, 1 µm to 1 mm, 1 µm to 500 µm, 1 µm to 100 µm, 1 µm to 50 µm, or 1 µm to 10 µm.

The inactive member 40 may further include a position determining unit (not shown) configured to determine the position of the inactive member 40 on the solid electrolyte layer 30. Since the inactive member 40 includes a position determining unit, it may be easy to determine the position of the inactive member 40 on the solid electrolyte layer 30. As a result, the manufacturing speed of the all-solid-state secondary battery 1 may be increased, and the ease of manufacturing may be improved.

Referring to FIGS. 9 and 10, the inactive member 40 extends from one side surface of the cathode 10 to the end portion of the solid electrolyte layer 30. Since the inactive member 40 extends to the end portion of the solid electrolyte layer 30, cracks occurring at the end portion of the solid electrolyte layer 30 can be suppressed. The end portion of the solid electrolyte layer (30) is an outermost portion that comes into contact with the side surface of the solid electrolyte layer 30. The inactive member 40 extends to the outermost portion that comes into contact with the side surface of the solid electrolyte layer 30. The inactive member 40 is separated from the anode layer 20, more specifically, from the first anode active material layer 22. The inactive member 40 extends to the end portion of the solid electrolyte layer 30, but does not come into contact with the anode layer 20. The inactive member 40 fills a space extending from one side surface of the cathode layer 10 to the end portion of the solid electrolyte layer 30.

The inactive member 40 may be, for example, a gasket. Since a gasket is used as the inactive member 40, cracks of the solid electrolyte layer 30 that occur due to a pressure difference during a pressing process can be effectively suppressed.

The inactive member 40 has, for example, a single-layer structure. Alternatively, although not shown in the drawings, the inactive member 40 may have a multilayer structure. In the inactive member 40 having a multilayer structure, each layer may have a different composition. The inactive member having a multilayer structure may have, for example, a two-layer structure, a three-layer structure, a four-layer structure, or a five-layer structure. The inactive member 40 having a multilayer structure may include, for example, at least one adhesive layer and at least one support layer. The adhesive layer effectively prevents a gap between the cathode layer 10 and the solid electrolyte layer 30 due to a change in the volume of the cathode layer 10 that occurs during the charging and discharging process of an all-solid-state secondary battery 1, and provides a bonding force between the support layer and another layer, thereby improving the film strength of the inactive member 40. The support layer provides a supporting force to the inactive member 40, prevents unevenness of pressure applied to the solid electrolyte layer 30 during a pressing process or a charging and discharging process, and prevents the deformation of the all-solid-state secondary battery 1 to be manufactured.

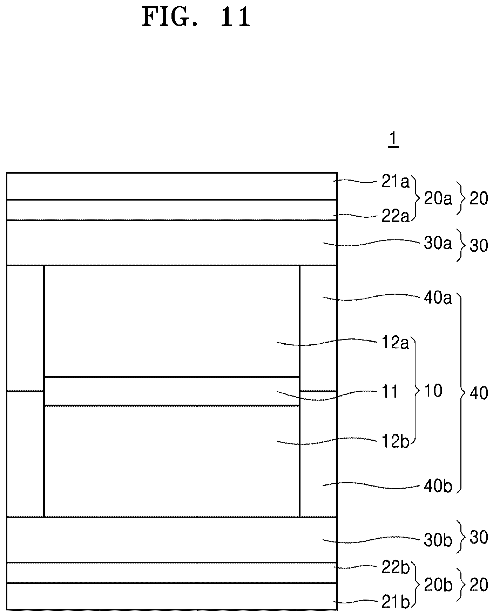

Referring to FIG. 11, an all-solid-state secondary battery 1 includes a cathode 10, an anode 20, and a solid electrolyte layer 30, 30a, 30b disposed between the cathode 10 and the anode 20, wherein the cathode layer 10 includes a cathode current collector 11 and a first cathode active material layer 12a and a second cathode active material layer 12b arranged on both surfaces of the cathode current collector 11, respectively, the solid electrolyte layer 30 includes a first solid electrolyte layer 30a in contact with the first cathode active material layer 12a and a second solid electrolyte layer 30b in contact with the second cathode active material layer 12b, the anode layer 20 includes a first anode layer 20a in contact with the first solid electrolyte layer 30a and a second anode layer 20b in contact with the second solid electrolyte layer 30b, respectively, and an inactive member 40 is disposed to surround the side surface of the cathode layer 10 between the first solid electrolyte layer 30a and the second solid electrolyte layer 30b which face each other. The inactive member 40 includes, for example, a first inactive member 40a in contact with the first solid electrolyte layer 30a and a second inactive member 40b in contact with the second solid electrolyte layer 30b. Therefore, the all-solid-state secondary battery 1 has a bi-cell structure. Since the all-solid-state secondary battery 1 has such a bi-cell structure, the solid electrolyte layer 30 and the anode layer 20 are arranged symmetrically to face each other with respect to the cathode layer 10 located at the center, so that structural deformation due to pressure applied during the manufacture of the all-solid-state secondary battery 1 is more effectively suppressed. Accordingly, cracking of the solid electrolyte layer 30 is suppressed during the manufacturing process and/or charging and discharging process of the all-solid-state secondary battery 1, thereby preventing a short circuit of the all-solid-state secondary battery 1, and as a result, the cycle characteristics of the all-solid-state secondary battery 1 are further improved. In addition, since only one cathode current collector 11 is used for the plurality of cathode active material layers 12a, 12b, the energy density of the all-solid-state secondary battery 1 increases.

Referring to FIGS. 9 to 11, the inactive member 40 is, for example, a flame-retardant inactive member. Since the flame-retardant inactive member provides flame retardancy, the possibility of thermal runaway and ignition of the all-solid-state secondary battery 1 can be prevented As a result, the safety of the all-solid-state secondary battery 1 is further improved. Since the flame-retardant inactive member absorbs residual moisture in the all-solid-state secondary battery 1, the deterioration of the all-solid-state secondary battery 1 is prevented, and thus the lifespan characteristics of the all-solid-state secondary battery 1 are improved.

The flame-retardant inactive member includes, for example, a matrix and a filler. The matrix includes, for example, a substrate and a stiffener. The matrix includes, for example, a fibrous substrate and a fibrous stiffener. The matrix may have elasticity by including a substrate. Therefore, the matrix can effectively accommodate the volume change during charging and discharging of the all-solid-state secondary battery 1 and can be disposed at various positions. The substrate included in the matrix includes, for example, a first fibrous material. Since the substrate includes the first fibrous material, a change in the volume of the cathode layer 10, occurring during the charging and discharging process of the all-solid-state secondary battery 1, can be effectively accommodated, and the deformation of the first inactive member 40 due to the volume change of the cathode layer 10 can be effectively suppressed. The first fibrous material is, for example, a material having an aspect ratio of 5 or more, 20 or more, or 50 or more. The first fibrous material is, for example, a material having an aspect ratio of 5 to 1000, 20 to 1000, or 50 to 1000. The first fibrous material is, for example, an insulating material. Since the first fibrous material is an insulating material, a short circuit between the cathode layer 10 and the anode layer 20 due to lithium dendrites, or the like, occurring during the charging and discharging process of the all-solid-state secondary battery 1, can be effectively prevented. The first fibrous material includes, for example, at least one selected from a pulp fiber, an insulating polymer fiber, and an ion-conducting polymer fiber. Since the matrix includes the stiffener, the strength of the matrix is improved. Therefore, the matrix can prevent an excessive volume change during the charging and discharging of the all-solid-state secondary battery 1 and prevent the deformation of the all-solid-state secondary battery 1. The stiffener included in the matrix includes, for example, a second fibrous material. Since the stiffener includes the second fibrous material, the strength of the matrix can be increased more uniformly. The second fibrous material is, for example, a material having an aspect ratio of 3 or more, 5 or more, or 10 or more. The second fibrous material is, for example, a material having an aspect ratio of 3 to 100, 5 to 100, or 10 to 100. The second fibrous material is, for example, a flame-retardant material. Since the second fibrous material is a flame-retardant material, ignition due to thermal runaway occurring during the charging and discharging process of the all-solid-state secondary battery 1 or due to external impact can be effectively suppressed. The second fibrous material includes, for example, a glass fiber, a metal oxide fiber, a ceramic fiber, or the like.

The flame-retardant inactive member includes a filler in addition to the matrix. The filler may be disposed within the matrix, on the surface of the matrix, or both within the matrix and on the surface of the matrix. The filler is, for example, an inorganic material. The filler included in the flame-retardant inactive member is, for example, a moisture getter, a flame retardant, or a lithium immobilizer. The moisture getter removes moisture remaining in the all-solid-state secondary battery 1 by adsorbing moisture at a temperature of, for example, lower than 100°C, thereby preventing the deterioration of the all-solid-state secondary battery 1. In addition, when the temperature of the all-solid-state secondary battery 1 increases to 150°C or higher due to thermal runaway that occurs during the charging and discharging process of the all-solid-state secondary battery 1 or due to external impact, the moisture getter can effectively suppress the ignition of the all-solid-state secondary battery 1 by desorbing the adsorbed moisture. The moisture getter is, for example, a metal hydroxide having moisture adsorption properties. The metal hydroxide included in the filler is, for example, Mg(OH)₂, Fe(OH)₃, Sb(OH)₃, Sn(OH)₄, Tl(OH)₃, Zr(OH)₄, Al(OH)₃, or a combination thereof. The flame retardant includes, for example, at least one selected from zinc borate, calcium molybdate zinc composite, MoO₃, (NH₄)₂Mo₂O₇, Sb₂O₃, and Sb₃O₅. The lithium immobilizer may be, for example, a compound that reacts with liquid lithium at a lithium melting temperature of 180° C or higher to immobilize lithium. The lithium immobilizer may react with liquid lithium to change the lithium into other insoluble compounds. The lithium immobilizer is, for example, a metal oxide having reactivity with liquid lithium. The metal oxide included in the filler is, for example, TiO₂, ZrO₂, HfO₂, ThO₂, or a combination thereof. The metal oxide reacts with liquid lithium to produce Li₂O and a metal. The reaction scheme is, for example, 4Li + MO₂ -> M + 2Li₂O. Since liquid lithium reacts with metal oxide to produce lithium oxide, liquid lithium is immobilized. Leakage of molten liquid lithium into the cathode at high temperatures may be suppressed. Therefore, the safety of all-solid-state secondary batteries can be improved.

The content of the filler included in the flame-retardant inactive member is, for example, 1 to 80 parts by weight, 5 to 80 parts by weight, 10 to 80 parts by weight, 20 to 80 parts by weight, 30 to 80 parts by weight, 40 to 80 parts by weight, 50 to 80 parts by weight, 60 to 80 parts by weight, or 65 to 80 parts by weight, based on 100 parts by weight of the flame-retardant inactive member 4.

The flame-retardant inactive member may further include, for example, a binder. The binder may include, for example, a curable polymer or a non-curable polymer. The curable polymer is a polymer that is cured by heat and/or pressure. The curable polymer is, for example, solid at room temperature. The flame-retardant inactive member includes, for example, a heat-pressing curable film and/or a cured product thereof. The heat-pressing curable film is, for example, TSA-66 of Toray Co., Ltd.

The flame-retardant inactive member may additionally include other materials in addition to the above-described substrate, stiffener, filler, and binder. The flame-retardant inactive member may further include, for example, at least one selected from paper, an insulating polymer, an ion-conducting polymer, an insulating inorganic material, an oxide-based solid electrolyte, and a sulfide-based solid electrolyte. The insulating polymer may be an olefinic polymer such as polypropylene (PP) or polyethylene (PE).

The density of the substrate or stiffener included in the flame-retardant inactive member may be, for example, 10% to 300%, 10% to 150%, 10% to 140%, 10% to 130%, or 10% to 120% of the density of the cathode active material included in the lithium host layer 22.

The inactive member 40 is a member that does not include a material having electrochemical activity, for example, an electrode active material. The electrode active material is a material that absorbs/desorbs lithium. The inactive member 40 is a member made of a material other than an electrode active material and used in the relevant technical field.

### [Solid electrolyte layer]

### [Solid electrolyte layer: solid electrolyte]

Referring to FIGS. 7 to 11, the solid electrolyte layer 30 includes a solid electrolyte disposed between the cathode layer 10 and the anode layer 20.

The solid electrolyte layer 30 may include a sulfide-based solid electrolyte, an oxide-based solid electrolyte, a polymer solid electrolyte, or a combination thereof. The solid electrolyte layer 30 may not include the first fibrous sulfide-based solid electrolyte 100.

The sulfide-based solid electrolyte may be selected from the sulfide-based solid electrolytes used in the cathode active material layer 12.

The sulfide-based solid electrolyte may additionally include, for example, the first fibrous sulfide-based solid electrolyte 100. The content of the first fibrous sulfide-based solid electrolyte 100 may be, for example, 50 wt% or more, 60 wt% or more, 70 wt% or more, 80 wt% or more, 90 wt% or more, or 95 wt% or more of the total weight of the solid electrolyte layer 30. The content of the first fibrous sulfide-based solid electrolyte 100 may be, for example, 50 wt% to 100 wt%, 60 wt% to 100 wt%, 70 wt% to 100 wt%, 80 wt% to 100 wt%, 90 wt% to 99.99 wt%, or 95 wt% to 99 wt% of the total weight of the solid electrolyte layer 30. Since the solid electrolyte layer 30 includes the first fibrous sulfide-based solid electrolyte 100, the lifespan characteristics of an all-solid-state secondary battery can be further improved.

The oxide-based solid electrolyte may be selected from the oxide-based solid electrolytes used in the cathode active material layer 12.

The polymer solid electrolyte is an electrolyte that includes a mixture of a lithium salt and a polymer or includes a polymer having an ion-conducting functional group. The polymer solid electrolyte is, for example, a polymer electrolyte that does not include a liquid electrolyte. The polymer used in the polymer solid electrolyte may be, but is not limited to, for example, polyethylene oxide (PEO), polyvinylidene fluoride (PVDF), vinylidene fluoride-hexafluoropropylene (PVDF-HFP), polyethylene oxide (PEO), poly(styrene-b-ethylene oxide) block copolymer (PS-PEO), poly(styrene-butadiene), poly(styrene-isoprene-styrene), poly(styrene-b-divinylbenzene) block copolymer, poly(styrene-ethylene oxide-styrene) block copolymer, polystyrene sulfonate (PSS), polyvinyl fluoride (PVF), polymethyl methacrylate (PMMA), poly(methylmethacrylate), polyethylene glycol (PEG), polyacrylonitrile (PAN), polytetrafluoroethylene (PTFE), polyethylenedioxythiophene (PEDOT), polypyrrole (PPY), polyacrylonitrile (PAN), polyaniline, polyacetylene, Nafion, Aquivion, Flemion, Gore, Aciplex, Morgane ADP, sulfonated poly(ether ether ketone) (SPEEK), sulfonated poly(arylene ether ketone ketone sulfone) (PAEKKS), sulfonated poly(aryl ether ketone) (SPAEK), poly[bis(benzimidazobenzisoquinolinones)] (SPBIBI), poly(styrene sulfonate) (PSS), lithium 9,10-diphenylatlacene-2-sulfonate 9,10-diphenylanthracene-2-sulfonate (DPASLi+), or a combination thereof, and any material that is used as a plolymer electrolyte in the relevant technical field may be used. Any lithium salt that can be used as a lithium salt in the relevant technical field may be used. The lithium salt is, for example, LiPF₆, LiBF₄, LiSbF₆, LiAsF₆, LiClO₄, LiCF₃SO₃, Li(CF₃SO₂)₂N, LiC₄F₉SO₃, LiAlO₂, LiAlCl₄, LiN(CₓF₂ₓ₊₁SO₂)(C_{y}F_{2y+1}SO₂) (x and y are each 1 to 20), LiCl, Lil, or a mixture thereof.

The gel electrolyte is, for example, a gel polymer electrolyte. The gel polymer electrolyte is an electrolyte that includes a liquid electrolyte and a polymer or includes an organic solvent and a polymer having an ion-conducting functional group. The liquid electrolyte may be, for example, an ionic liquid, a mixture of a lithium salt and an organic solvent, a mixture of an ionic liquid and an organic solvent, or a mixture of a lithium salt, an ionic liquid, and an organic solvent. The polymer may be selected from the polymers used in the solid polymer electrolyte. The organic solvent may be selected from the organic solvents used in the liquid electrolyte. The lithium salt may be selected from the lithium salts used in the solid polymer electrolyte. The ionic liquid is a salt that is liquid at room temperature or molten at room temperature and is composed only of ions and has a melting point of room temperature or lower. The ionic liquid may include at least one selected from compounds including, for example, a) at least one cation selected from ammonium, pyrrolidinium, pyridinium, pyrimidinium, imidazolium, piperidinium, pyrazolium, oxazolium, pyridazinium, phosphonium, sulfonium, triazolium, and mixtures thereof, and b) at least one anion selected from BF4-, PF6-, AsF6-, SbF6-, AlCl4-, HSO4-, ClO4-, CH3SO3-, CF3CO2-, Cl-, Br-, I-, BF4-, SO4-, CF3SO3-, (FSO2)2N-, (C2F5SO2)2N-, (C2F5SO2)(CF3SO2)N-, and (CF3SO2)2N-. The polymer solid electrolyte may be impregnated into an electrolyte solution in a lithium battery to form a gel polymer electrolyte. The gel polymer electrolyte may further include inorganic particles.

The solid electrolyte layer 30 may be impermeable to lithium polysulfide. Therefore, side reactions between the anode layer and lithium polysulfide generated during the charging and discharging of the sulfide-based cathode active material may be blocked. Accordingly, the cycle characteristics of the all-solid-state secondary battery 1 including the solid electrolyte layer 30 can be improved.

### [Solid electrolyte layer: binder]

The solid electrolyte layer 30 may include, for example, a binder. The binder included in the solid electrolyte layer may be, but is not limited to, styrene butadiene rubber (SBR), polytetrafluoroethylene, polyvinylidene fluoride, or polyethylene, and any binder used in the relevant technical field may be used. The binder of the solid electrolyte layer 30 may be the same as or different from the binder included in the cathode active material layer 12 and the anode active material layer 22. The binder may be omitted.

The content of the binder included in the solid electrolyte layer 30 is 0.1 wt% to 10 wt%, 0.1 wt% to 5 wt%, 0.1 wt% to 3 wt%, 0.1 wt% to 1 wt%, 0 wt% to 0.5 wt%, or 0 wt% to 0.1 wt% with respect to the total weight of the solid electrolyte layer 30.

### [Anode layer]

### [Anode layer: anode active material]

Referring to FIGS. 7 to 11, an anode layer 20 includes a first anode active material layer 22. The first anode active material layer 22 includes, for example, an anode active material and a binder.

The anode active material included in the first anode active material layer 22 is, for example, an anode material capable of forming an alloy or compound with lithium.

The anode active material included in the first anode active material layer 22 has, for example, a particle shape. The average particle size of the anode active material having a particle shape is, for example, 4 µm or less, 3 µm or less, 2 µm or less, 1 µm or less, 500 nm or less, 300 nm or less, or 100 nm or less. The average particle size of the anode active material having a particle shape is, for example, 10 nm to 4 µm, 10 nm to 3 µm, 10 nm to 2 µm, 10 nm to 1 µm, 10 nm to 500 nm, 10 nm to 300 nm or 10 nm to 100 nm. Since the anode active material has an average particle size in this range, reversible absorption and/or desorption of lithium can be facilitated during charging and discharging. The average particle size of the anode active material is, for example, a median diameter (D50) measured using a laser particle size distribution meter.

The anode active material included in the first anode active material layer 22 includes, for example, at least one selected from a carbon-based anode active material and a metal or metalloid anode active material.

The carbon-based anode active material includes, for example, amorphous carbon, crystalline carbon, porous carbon, or a combination thereof.

The carbon-based anode active material is, particularly, amorphous carbon. The amorphous carbon may be, but is not limited to, carbon black (CB), acetylene black (AB), furnace black (FB), ketjen black (KB), and graphene, and any material classified as amorphous carbon in the relevant technical field may be used. The amorphous carbon is carbon that has no crystallinity or very low crystallinity and is distinguished from crystalline carbon or graphitic carbon.

The carbon-based anode active material may be, for example, porous carbon. The pore volume of pores included in the porous carbon is, for example, 0.1 cc/g to 10.0 cc/g, 0.5 cc/g to 5 cc/g, or 0.1 cc/g to 1 cc/g. The average pore diameter of pores included in the porous carbon is, for example, 1 nm to 50 nm, 1 nm to 30 nm, or 1 nm to 10 nm. The BET specific surface area of the porous carbon is, for example, 100 m²/g to 3000 m²/g.

The metal or metalloid anode active material includes, but is not necessarily limited to, at least one selected from the group consisting of gold (Au), platinum (Pt), palladium (Pd), silicon (Si), silver (Ag), aluminum (Al), bismuth (Bi), tin (Sn), and zinc (Zn), and any metal or metalloid anode active material that forms an alloy or compound with lithium in the relevant technical field may be used. For example, nickel (Ni) does not form an alloy with lithium and is therefore not a metal anode active material.

The first anode active material layer 22 includes a type of negative electrode active material among these anode active materials or a mixture of a plurality of different anode active materials. For example, the first anode active material layer 22 includes only amorphous carbon, or includes at least one selected from the group consisting of gold (Au), platinum (Pt), palladium (Pd), silicon (Si), silver (Ag), aluminum (Al), bismuth (Bi), tin (Sn), and zinc (Zn). Alternatively, the first anode active material layer 22 includes a mixture of amorphous carbon and at least one selected from the group consisting of gold (Au), platinum (Pt), palladium (Pd), silicon (Si), silver (Ag), aluminum (Al), bismuth (Bi), tin (Sn), and zinc (Zn). The mixing ratio of the mixture of amorphous carbon and gold, etc., is, for example, 99:1 to 1:99, 10:1 to 1:2, 5:1 to 1:1, or 4:1 to 2:1 by weight ratio, but is not necessarily limited to this range and is selected according to the characteristics of the required all-solid-state secondary battery 1. Since the anode active material has this composition, the cycle characteristics of the all-solid-state secondary battery 1 are further improved.

The anode active material included in the first anode active material layer 22 includes, for example, a mixture of first particles made of amorphous carbon and second particles made of a metal or metalloid. the metal or metalloid includes, for example, gold (Au), platinum (Pt), palladium (Pd), silicon (Si), silver (Ag), aluminum (Al), bismuth (Bi), tin (Sn), and zinc (Zn). The metalloid, alternatively, is a semiconductor. The content of the second particles is 1 wt% to 99 wt%, 1 wt% to 60 wt%, 8 wt% to 60 wt%, 10 wt% to 50 wt%, 15 wt% to 40 wt%, or 20 wt% to 30 wt% based on the total weight of the mixture. Since the second particles have a content in this range, the cycle characteristics of the all-solid-state secondary battery 1 are further improved.

Alternatively, the first anode active material layer 22 includes a composite anode active material. The composite anode active material may include, for example, a carbon-based support and a metal-based anode active material supported on the carbon-based support. Since the composite anode active material has this structure, the localization of the metal-based anode active material in the first anode active material layer can be prevented, and a uniform distribution can be obtained. As a result, the cycle characteristics of the all-solid-state secondary battery 1 including the first anode active material layer 22 are further improved.

The metal-based anode active material supported on the carbon-based support includes, for example, a metal, a metal oxide, a composite of a metal and a metal oxide, or a combination thereof. The metal includes, for example, gold (Au), platinum (Pt), palladium (Pd), silicon (Si), silver (Ag), aluminum (Al), bismuth (Bi), tin (Sn), and zinc (Zn). The metal oxide includes, for example, gold (Au) oxide, platinum (Pt) oxide, palladium (Pd) oxide, silicon (Si) oxide, silver (Ag) oxide, aluminum (Al) oxide, bismuth (Bi) oxide, tin (Sn) oxide, and zinc (Zn) oxide. The metal oxide may include, for example, AuₓO_{y} (0<x≤2, 0<y≤3), PtₓO_{y} (0<x≤1, 0<y≤2), PdₓO_{y} (0<x≤1, 0<y≤1), SiₓO_{y} (0<x≤1, 0<y≤2), AgₓO_{y} (0<x≤2, 0<y≤1), AlₓO_{y} (0<x≤2, 0<y≤3), BiₓO_{y} (0<x≤2, 0<y≤3), SnₓO_{y} (0<x≤1, 0<y≤2), ZnₓO_{y} (0<x≤1, 0<y≤1), or a combination thereof. The composite of the metal and the metal oxide may include, for example, a composite of Au and AuₓO_{y} (0<x≤2, 0<y≤3), a composite of Pt and PtₓO_{y} (0<x≤1, 0<y≤2), a composite of Pd and PdₓO_{y} (0<x≤1, 0<y≤1), a composite of Si and SiₓO_{y} (0<x≤1, 0<y≤2), a composite of Ag and AgₓO_{y} (0<x≤2, 0<y≤1), a composite of Al and AlₓO_{y} (0<x≤2, 0<y≤3), a composite of Bi and BiₓO_{y} (0<x≤2, 0<y≤3), a composite of Sn and SnₓO_{y} (0<x≤1, 0<y≤2), a composite of Zn and ZnₓO_{y} (0<x≤1, 0<y≤1), or a combination thereof.

The carbon-based support is, for example, amorphous carbon. The amorphous carbon may be, but is not limited to, carbon black (CB), acetylene black (AB), furnace black (FB), ketjen black (KB), graphene, activated carbon, carbon nanofibers (CNF), and carbon nanotubes (CNT), and any material classified as amorphous carbon in the relevant technical field may be used. The amorphous carbon is carbon that has no crystallinity or very low crystallinity and is distinguished from crystalline carbon or graphitic carbon. Carbonaceous materials are, for example, carbon-based anode active materials.

The composite anode active material has, for example, a particle shape. The particle size of the composite anode active material having a particle shape is, for example, 10 nm to 4 µm, 10 nm to 1 µm, 10 nm to 500 nm, 10 nm to 200 nm, or 10 nm to 100 nm. Since the composite anode active material has a particle size in this range, reversible absorption and/or desorption of lithium can be facilitated during charging and discharging. The metal-based anode active material supported on the support may have, for example, a particle shape. The particle size of the metal-based anode active material may be, for example, 1 nm to 200 nm, 1 nm to 150 nm, 5 nm to 100 nm, or 10 nm to 50 nm. The carbon-based support may, for example, have a particle shape. The particle size of the carbon-based support may be, for example, 10 nm to 2 µm, 10 nm to 1 µm, 10 nm to 500 nm, 10 nm to 200 nm or 10 nm to 100 nm. Since the carbon-based support has a particle size in this range, it can be more uniformly disposed within the first anode active material layer. The carbon-based support may be, for example, a nanoparticle having a particle size of 500 nm or less. The particle size of the composite anode active material, the particle size of the metal-based anode active material, and the particle size of the carbon-based support are, for example, average particle sizes. The average particle size is, for example, a median diameter (D50) measured using a laser particle size distribution meter. Alternatively, the average particle size may be determined automatically using software from electron microscope images, or may be determined manually by hand.

### [Anode layer: binder]

The binder included in the first anode active material layer 22 may be, but is not necessarily limited to, for example, styrene-butadiene rubber (SBR), polytetrafluoroethylene, polyvinylidene fluoride, polyethylene, vinylidene fluoride/hexafluoropropylene copolymer, polyacrylonitrile, or polymethyl methacrylate, and any binder used in the relevant technical field may be used. The binder may consist of a single binder or a plurality of different binders.

Since the first anode active material layer 22 includes the binder, the first anode active material layer 22 is stabilized on the anode current collector 21. In addition, cracks of the first anode active material layer 22 are suppressed despite changes in the volume and/or relative position of the first anode active material layer 22 during a charging and discharging process. For example, when the first anode active material layer 22 does not include the binder, it is possible for the first anode active material layer 22 to be easily separated from the anode current collector 21. As the first anode active material layer 22 is detached from the anode current collector 21, the possibility of a short circuit occurring increases when the anode current collector 21 comes into contact with the solid electrolyte layer 30 at the exposed portion of the anode current collector 21. The first anode active material layer 22 is prepared by, for example, applying a slurry, in which materials constituting the first anode active material layer 22 are dispersed, onto the anode current collector 21 and drying the applied slurry. By including a binder in the first anode active material layer 22, stable dispersion of the anode active material in the slurry is possible. For example, when applying the slurry onto the anode current collector 21 by screen printing, it is possible to suppress the clogging of a screen (e.g., clogging of the anode active material by aggregates).

### [Anode layer: other additives]

The first anode active material layer 22 may further include additives used in a conventional all-solid-state secondary batteries 1, such as a filler, a coating agent, a dispersant, and an ion conductive aid.

### [Anode layer: solid electrolyte]

The first anode active material layer 22 may further include a solid electrolyte. The solid electrolyte may be, for example, a material selected from the solid electrolytes included in the solid electrolyte layer 30. The solid electrolyte included in the first anode active material layer 22 may act as a reaction point where the formation of lithium metal begins in the first anode active material layer 22, a space where the formed lithium metal is stored, or a path for transferring lithium ions. The solid electrolyte may be omitted.

In the first anode active material layer 22, the content of the solid electrolyte may be high in a region adjacent to the solid electrolyte layer 30 and may be low in a region adjacent to the anode current collector 21. In the first anode active material layer 22, the solid electrolyte may have a concentration gradient in which the concentration of the solid electrolyte decreases from a region adjacent to the solid electrolyte layer 30 to a region adjacent to the anode current collector 21.

### [Anode layer: first anode active material layer]

The initial charge capacity (B) of the first anode active material layer is, for example, less than 50%, 45% or less, 40% or less, 30% or less, 20% or less, or 10% or less of the initial charge capacity (A) of the cathode active material layer. The ratio (B/A) of the initial charge capacity (B) of the first anode active material layer 22 to the initial charge capacity (A) of the cathode active material layer is, for example, 0.005 to 0.45. The initial charge capacity of the anode active material layer 12 is determined at a maximum charge voltage for Li/Li⁺ from a 1st open circuit voltage The initial charge capacity of the first anode active material layer 22 is determined at a voltage of 0.01 V for Li/Li⁺ from a 2nd open circuit voltage.

The maximum charge voltage is determined by the type of a cathode active material. The maximum charge voltage may be, for example, 1.5 V, 2.0 V, 2.5 V, 3.0 V, 3.5 V, 4.0 V, 4.2 V, or 4.3 V. For example, the maximum charge voltage of Li₂S or a Li₂S composite may be 2.5 V for Li/Li⁺. For example, the maximum charge voltage of Li₂S or a Li₂S composite may be 3.0 V for Li/Li⁺. The ratio (B/A) of the initial charge capacity (B) of the first anode active material layer 22 to the initial charge capacity (A) of the cathode active material layer is, for example, 0.01 to 0.3, 0.01 to 0.2, or 0.05 to 0.1.

The initial charge capacity (mAh) of the cathode active material layer 12 is obtained by multiplying the charge capacity density (charge specific capacity) (mAh/g) of the cathode active material by the mass (g) of the cathode active material in the cathode active material layer 12. When several types of cathode active materials are used, values of charge capacity density x mass is calculated for all cathode active materials, and the sum of these values is an initial charge capacity of the cathode active material layer 12. The initial charge capacity of the first anode active material layer 22 is also calculated in the same way. The initial charge capacity of the first anode active material layer 22 is obtained by multiplying the charge capacity density (mAh/g) of the anode active material by the mass of the anode active material in the first anode active material layer 22. When several types of anode active materials are used, values of charge capacity density x mass is calculated for all anode active materials, and the sum of these values is an initial charge capacity of the anode active material layer 22. The charge capacity density of each of the cathode active materials and anode active materials may be measured by using an all-solid-state half-cell using lithium metal as a counter electrode. The initial charge capacity of each of the cathode active material layer 12 and the first anode active material layer 22 may be directly measured using an all-solid-state half-cell at a constant current density of, for example, 0.1 mA/cm². For the cathode, the measurements may be performed for an operating voltage from the first open circuit voltage (OCV) to the maximum charge voltage, for example, 3.0 V (vs. Li/Li+). For the anode, the measurements may be performed for an operating voltage from the second open circuit voltage (OCV) to a voltage of 0.01 V for the anode, for example, lithium metal. For example, the all-solid-state half-cell having the cathode active material layer may be charged from the first open circuit voltage to 3.0 V with a constant current of 0.1 mA/cm², and the all-solid-state half-cell having the first anode active material layer may be charged from the second open circuit voltage to 0.01 V with a constant current of 0.1 mA/cm². The current density during constant current charging may be, for example, 0.2 mA/cm² or 0.5 mA/cm². The all-solid-state half-cell having the cathode active material layer may be charged from the first open circuit voltage to 2.5 V, 2.0 V, 2.5 V, 2.8 V, 3.0 V, 3.5 V, or 4.0 V. The maximum charge voltage of the cathode active material layer may be determined by the maximum voltage of the battery satisfying the safety conditions according to JISC8712:2015 of the Japanese Standards Association.

When the initial charge capacity of the first anode active material layer 22 is too small, the thickness of the first anode active material layer 22 becomes very thin, so that lithium dendrites formed between the first anode active material layer 22 and the anode current collector 21 during repeated charging and discharging processes collapse the first anode active material layer 22, thus making it difficult to improve the cycle characteristics of the all-solid-state secondary battery 1. When the charge capacity of the first anode active material layer 22 increases excessively, the energy density of the all-solid-state secondary battery 1 decreases and the internal resistance of the all-solid-state secondary battery 1 due to the first anode active material layer 22 increases, thus making it difficult to improve the cycle characteristics of the all-solid-state secondary battery 1.

The thickness of the first anode active material layer 22 is, for example, 50% or less, 40% or less, 30% or less, 20% or less, 10% or less, or 5% or less of the thickness of the cathode active material layer 12. The thickness of the first anode active material layer 22 is, for example, 1% to 50%, 1% to 40%, 1% to 30%, 1% to 20%, 1% to 10%, or 1% to 5% of the thickness of the cathode active material layer 12. The thickness of the first anode active material layer 22 is, for example, 1 µm to 20 µm, 2 µm to 15 µm, or 3 µm to 10 µm. When the thickness of the first anode active material layer 22 is too thin, lithium dendrites formed between the first anode active material layer 22 and the anode current collector 21 collapse the first anode active material layer 22, thus making it difficult to improve the cycle characteristics of the all-solid-state secondary battery 1. When the thickness of the first anode active material layer 22 increases excessively, the energy density of the all-solid-state secondary battery 1 decreases and the internal resistance of the all-solid-state secondary battery 1 due to the first anode active material layer 22 increases, thus making it difficult to improve the cycle characteristics of the all-solid-state secondary battery 1. When the thickness of the first anode active material layer 22 decreases, for example, the initial charge capacity of the first anode active material layer 22 also decreases.

### [Anode layer: second anode active material layer]

Although not shown in the drawings, the all-solid-state secondary battery 1 further includes, for example, a second anode active material layer disposed between the anode current collector 21 and the first anode active material layer 22, after being charged. The second anode active material layer is a metal layer including lithium or a lithium alloy. The metal layer includes lithium or a lithium alloy. Therefore, the second anode active material layer is a metal layer including lithium and thus acts as a lithium reservoir. The lithium alloy may be, but is not limited to, a Li-Al alloy, a Li-Sn alloy, a Li-In alloy, a Li-Ag alloy, a Li-Au alloy, a Li-Zn alloy, a Li-Ge alloy, or a Li-Si alloy, and any lithium alloy used in the relevant technical field may be used. The second anode active material layer may be composed of one of these alloys or of lithium, or may be composed of several types of alloys. The second anode active material layer is, for example, a plated layer. The second anode active material layer is deposited between the first anode active material layer 22 and the anode current collector 21 during the charging process of the all-solid-state secondary battery 1.

The thickness of the second negative electrode active material layer is, but is not particularly limited, for example, 1 µm to 500 µm, 1 µm to 200 µm, 1 µm to 150 µm, 1 µm to 100 µm, or 1 µm to 50 µm. When the thickness of the second anode active material layer is too thin, it is difficult for the second anode active material layer to act as a lithium reservoir. When the thickness of the second anode active material layer is too thick, the mass and volume of the all-solid-state secondary battery 1 may increase, and the cycle characteristics of the all-solid-state secondary battery 1 may rather deteriorate.

Alternatively, in the all-solid-state secondary battery 1, the second anode active material layer may be disposed between the anode current collector 21 and the first anode active material layer 22 before assembling the all-solid-state secondary battery 1. When the second anode active material layer is disposed between the anode current collector 21 and the first anode active material layer 22 before assembling the all-solid-state secondary battery 1, the second anode active material layer acts as a lithium reservoir because it is a metal layer including lithium. For example, lithium foil may be disposed between the anode current collector 21 and the first anode active material layer 22 before assembling the all-solid-state secondary battery 1.

When the second anode active material layer is deposited by charging after assembling the all-solid-state secondary battery 1, the energy density of the all-solid-state secondary battery 1 increases because the second anode active material layer is not included during the assembling of the all-solid-state secondary battery 1. When charging the all-solid-state secondary battery 1, the charging is performed in excess of the charge capacity of the first anode active material layer 22. That is, the first anode active material layer 22 is overcharged. During the initial stage of charging, lithium is absorbed into the first anode active material layer 22. The anode active material included in the first cathode active material layer 22 forms an alloy or compound with the lithium ions that have moved from the cathode layer 10. When charging exceeds the capacity of the first anode active material layer 22, for example, lithium is deposited on the back surface of the first anode active material layer 22, that is, between the anode current collector 21 and the first anode active material layer 22, and a metal layer corresponding to the second anode active material layer is formed by the deposited lithium. The second anode active material layer is a metal layer mainly including lithium (i.e., metal lithium). These results are obtained because the anode active material included in the first anode active material layer 22 includes a material that forms an alloy or compound with lithium. During discharging, lithium in the first anode active material layer 22 and the second anode active material layer, that is, the metal layer, is ionized and moves toward the cathode layer 10. Therefore, it is possible to use lithium as an anode active material in the all-solid-state secondary battery 1. In addition, since the first anode active material layer 22 covers the second anode active material layer, it acts as a protective layer for the second anode active material layer, that is, the metal layer, and at the same time, serves to suppress the deposition and growth of lithium dendrites. Therefore, the short circuit and capacity reduction of the all-solid-state secondary battery 1 are suppressed, and as a result, the cycle characteristics of the all-solid-state secondary battery 1 are improved. In addition, when the second anode active material layer is disposed by charging after assembling the all-solid-state secondary battery 1, the anode layer 20, that is, the anode current collector 21 and the first anode active material layer 22, and the region therebetween, are Li-free regions that do not include lithium (Li) in the initial state of the all-solid-state secondary battery 1 or in the state after complete discharging.

### [Anode layer: anode current collector]

The anode current collector 21 is composed of, for example, a material that does not react with lithium, that is, does not form both an alloy and a compound. Examples of the material constituting the anode collector 21 include, but are not necessarily limited to, copper (Cu), stainless steel, titanium (Ti), iron (Fe), cobalt (Co), and nickel (Ni), and any material that can be used as an electrode collector in the relevant technical field may be used. The anode current collector 21 may be composed of one of the above-described metals, or may be composed of an alloy or coating material of two or more of the above-described metals. The anode collector 21 has, for example, a shape of a plate or a foil.

Although not shown in the drawings, the all-solid-state secondary battery 1 may further include, for example, a thin film including an element capable of forming an alloy with lithium on one surface of the anode current collector 21. The thin film is disposed between the anode current collector 21 and the first anode active material layer 22. The thin film includes, for example, an element capable of forming an alloy with lithium. The element capable of forming an alloy with lithium may be, but is not necessarily limited to, gold, silver, zinc, tin, indium, silicon, aluminum, or bismuth, and any element capable of forming an alloy with lithium in the relevant technical field may be used. The thin film may be composed of one of these metals or may composed of an alloy of several types of metals. Since the thin film is disposed on one surface of the anode current collector 21, for example, the deposition shape of the second anode active material layer deposited between the thin film and the first anode active material layer 22 becomes flatter, and thus the cycle characteristics of the all-solid-state secondary battery 1 can be further improved.

The thickness of the thin film is, for example, 1 nm to 800 nm, 10 nm to 700 nm, 50 nm to 600 nm, or 100 nm to 500 nm. When the thickness of the thin film is less than 1 nm, it may be difficult for the thin film to perform its function. When the thickness of the thin film is too thick, the thin film itself absorbs lithium, so that the deposition amount of lithium in the anode may be reduced, the energy density of the all-solid-state battery may be reduced, and the cycle characteristics of the all-solid-state secondary battery 1 may be deteriorated. The thin film may be formed on the anode current collector 21 by, for example, a vacuum deposition method, a sputtering method, a plating method, or the like, but the disclosure is not necessarily limited to these methods, and any method capable of forming a thin film in the relevant technical field is possible.

Although not shown in the drawings, the anode current collector 21 may include, for example, a base film and a metal layer disposed on one or both surfaces of the base film. The base film may include, for example, a polymer. The polymer may be, for example, a thermoplastic polymer. The polymer may include, for example, polyethylene terephthalate (PET), polyethylene (PE), polypropylene (PP), polybutylene terephthalate (PBT), polyimide (PI), or a combination thereof. The polymer may be an insulating polymer. Since the base film includes an insulating thermoplastic polymer, when a short circuit occurs, the base film softens or liquefies, thereby blocking battery operation and suppressing a rapid increase in current. The metal layer may include, for example, copper (Cu), stainless steel, titanium (Ti), iron (Fe), cobalt (Co), nickel (Ni), or an alloy thereof. The anode current collector 21 may additionally include a metal chip and/or a lead tab. For more specific details on the base film, metal layer, metal chip, and lead tab of the anode current collector 21, refer to the above-described cathode current collector 11. Since the anode current collector 21 has this structure, the weight of the anode may be reduced, and as a result, the energy density of the anode and the lithium battery may be improved.

### Mode for the Invention

Hereinafter, the present inventive concept will be described in more detail through examples and comparative examples. However, these examples are intended to illustrate the present inventive concept, and the scope of the present inventive concept is not limited to these examples.

### (Fibrous sulfide-based solid electrolyte)

### Preparation Example 1: First fibrous sulfide-based solid electrolyte (core/shell structure)

Polyacrylonitrile (PAN, Mw 150,000 Dalton, Sigma-Aldrich) was dissolved in a solvent (dimethylformamide (DMF)) to prepare a 10 wt% solution. The prepared solution was injected into a syringe and electrospinning was performed to prepare polymer fibers. The applied voltage was 17.5 kV and the extracting rate was 15 µL/min. The prepared polymer fibers were heat-treated at 700°C for 5 hours in an argon atmosphere to carbonize the polymer fibers, thereby producing carbon nanofibers (CNF).

Carbon nanofiber (CNF) powder and Li₆PS₅Cl powder, argyrodite-type crystal, were mixed in a weight ratio of 2:1 to prepare a mixture, and then ethanol was added in an equal volume to the prepared mixture and stirring was performed at 90°C for 20 hours to prepare a mixed solution including dissolved Li₆PS₅Cl. After drying the mixed solution, the dried product was heat-treated at 300 °C for 8 hours in a nitrogen atmosphere to prepare a CNF-Li₆PS₅Cl composite. The CNF-Li₆PS₅Cl composite is a first fibrous sulfide-based solid electrolyte in which a Li₆PS₅Cl shell is applied on a CNF core. The CNF-Li₆PS₅Cl composite had a rod shape having a thickness of about 500 nm, a length of about 5 µm, and an aspect ratio of 10. The cross-section of the CNF-Li₆PS₅Cl composite was circular. The thickness and length of the CNF-Li₆PS₅Cl composite are average values calculated from a plurality of composite particles read from scanning electron microscope images.

### (All-solid-state secondary battery)

Example 1: Mono-cell all-solid-state secondary battery, sulfide-based cathode active material (Li₂S-C-LiI composite), fibrous solid electrolyte: particle-shaped solid electrolyte = 10:40 by weight ratio (including first fibrous solid electrolyte)

### (Manufacture of anode layer)

A SUS foil having a thickness of 10 µm was prepared as an anode current collector. Additionally, carbon black (CB) with a primary particle diameter of about 30 nm and silver (Ag) particles with an average particle diameter of about 60 nm were prepared as anode active materials.

4 g of a mixed powder of carbon black (CB) and silver (Ag) particles in a weight ratio of 3:1 was put into a container, and 4 g of an NMP solution including 7 wt% of a PVDF binder (#9300 from Kureha Corp.) was added to prepare a mixed solution. NMP (N-methyl-2-pyrrolidone) was added to the prepared mixed solution little by little, and simultaneously this mixed solution was stirred to prepare a slurry. The prepared slurry was applied onto a SUS sheet using a bar coater and dried in air at 80°C for 10 minutes to prepare a laminate. The prepared laminate was dried in vacuum at 40°C for 10 hours. The dried laminate was pressed by cold roll pressing to flatten the surface of the first anode active material layer of the laminate, thereby manufacturing an anode layer. The thickness of the first anode active material layer was about 15 µm. The area of the first anode active material layer was equal to the area of the anode current collector. The initial charge capacity of the anode layer (that is, the first anode active material layer) was measured using the above-described half-cell.

### (Manufacture of cathode layer)

A Li₂S-C-Lil composite was prepared as a cathode active material. The Li₂S-C-Lil composite was prepared by the method disclosed in Nano Lett. 2016, 16, 7, 4521-4527, except that except that Li₆PS₅Cl was changed to Lil. The CNF-Li₆PS₅Cl composite prepared in Preparation Example 1 was prepared as a first fibrous solid electrolyte. Li₆PS₅Cl (D50 = 3.0 µm, crystalline), an argyrodite-type crystal, was prepared as an irregular particle-shaped solid electrolyte. Ketjen black was prepared as a conductive agent. The aspect ratio of the irregular particle-shaped solid electrolyte was less than 2.

These materials were mixed in a weight ratio of cathode active material: first fibrous solid electrolyte: irregular particle-shaped solid electrolyte: conductive agent = 40:10:40:10 to prepare a cathode mixture. The cathode mixture was obtained by dry mixing using a ball mill. The cathode mixture obtained by ball milling formed an ion-conducting and electron-conducting network.

The cathode mixture was disposed on one surface of an aluminum foil cathode collector coated with carbon on one surface thereof, and plate-pressed at a pressure of 200 MPa for 10 minutes to manufacture a cathode layer. The thickness of the cathode layer was about 120 µm. The thickness of the cathode active material layer was about 100 µm, and the thickness of the aluminum foil coated with carbon was about 20 µm. The area of the cathode active material layer was equal to the area of the cathode current collector. The initial charge capacity of the cathode layer (that is, the cathode active material layer) was measured using the above-described half-cell. The ratio (B/A) of the initial charge capacity (B) of the first anode active material layer to the initial charge capacity (A) of the cathode active material layer was less than 0.5. The initial charge capacity of the cathode active material layer was determined by the charging from the first open circuit voltage to 2.8 V vs. Li/Li⁺. The initial charge capacity of the first anode active material layer was determined by the charging from the second open circuit voltage to 0.01 V vs. Li/Li+. Additionally, in Examples 2 to 9, the ratios (B/A) were each less than 0.5.

### (Manufacture of solid electrolyte layer)

An acrylic binder was added in an amount of 1.5 parts by weight with respect to 98.5 parts by weight of a solid electrolyte to Li₆PS₅Cl, an argyrodite-type crystal (D50 = 3.0 µm, crystalline), to prepare a mixture. Octyl acetate was added to the prepared mixture, and simultaneously, stirring was performed to prepare a slurry. The prepared slurry was applied onto a 15 cm thick nonwoven fabric placed on a 75 cm thick PET substrate using a bar coater, and dried in air at 80°C for 10 minutes to obtain a laminate. The obtained laminate was dried in vacuum at 80°C for 2 hours. A solid electrolyte layer was manufactured by the above processes.

### (Flame-retardant inactive member)

A slurry, in which pulp fiber (cellulose fiber), glass fiber, aluminum hydroxide (Al(OH)₃), an acrylic binder, and a solvent were mixed, was formed into a gasket shape and then the solvent was removed to manufacture a flame-retardant inactive member.

The weight ratio of pulp fiber (cellulose fiber), glass fiber, aluminum hydroxide (Al(OH)₃), and acrylic binder was 20:8:70:2. The thickness of the inactive member was 120 µm.

Before disposing the manufactured flame-retardant inactive member on the solid electrolyte layer, the flame-retardant inactive member was heat-treated in vacuum at 80°C for 5 hours to remove moisture or the like.

### (Manufacture of all-solid-state secondary battery)

Referring to Fig. 6, a solid electrolyte layer was disposed on an anode layer such that a first anode active material layer comes into contact with the solid electrolyte layer. A flame-retardant inactive member was disposed on the solid electrolyte layer by thermal pressing to prepare an anode layer/solid electrolyte layer/inactive member laminate.

The inactive member was disposed on one surface of a cathode layer so as to face a cathode active material layer to prepare an electrode assembly of anode layer/solid electrolyte layer/cathode layer. The inactive member was disposed around the cathode layer so as to surround the side surface of the cathode layer and come into contact with the solid electrolyte layer. The inactive member was used as a gasket. The cathode layer was disposed at the center of the solid electrolyte layer, and the gasket was disposed to surround the cathode layer and extend to the end of the solid electrolyte layer. The area of the cathode layer was about 90% of the area of the solid electrolyte layer, and the gasket was disposed over the entire area of the remaining 10% of the solid electrolyte layer where the cathode layer was not disposed.

The prepared electrode assembly of anode layer/solid electrolyte layer/cathode layer was treated by plate pressing. The solid electrolyte layer was sintered by this plate pressing to improve battery characteristics. The thickness of the sintered solid electrolyte layer was about 45 µm. The sintered electrode assembly was put into a pouch and sealed to prepare a sealed electrode assembly. A portion of a cathode collector and a portion of an anode collector were protruded outside the sealed electrode assembly and used as a cathode layer terminal and an anode terminal.

The electrode assembly was disposed between two pressing plates (not shown), and the two pressing plates were fastened with screws to apply a constant pressure to both surfaces of the electrode assembly, thereby manufacturing an all-solid-state secondary battery.

### Example 2: Mono-cell all-solid-state secondary battery, sulfide-based cathode active material (Li₂S-C-LiI composite), fibrous solid electrolyte: particle-shaped solid electrolyte = 5:45 by weight ratio (including first fibrous solid electrolyte)

A solid-state secondary battery was manufactured in the same manner as in Example 1, except that the weight ratio of fibrous solid electrolyte: particle-shaped solid electrolyte was changed to 5:45.

### Example 3: Mono-cell all-solid-state secondary battery, sulfide-based cathode active material (Li₂S-C-LiI composite), fibrous solid electrolyte: particle-shaped solid electrolyte = 20:20 by weight ratio (including first fibrous solid electrolyte)

A solid-state secondary battery was manufactured in the same manner as in Example 1, except that the weight ratio of fibrous solid electrolyte: particle-shaped solid electrolyte was changed to 20:20.

### Example 4: Mono-cell all-solid-state secondary battery, sulfide-based cathode active material (Li₂S-C-LiI composite), fibrous solid electrolyte: particle-shaped solid electrolyte = 30:20 by weight ratio (including first fibrous solid electrolyte)

A solid-state secondary battery was manufactured in the same manner as in Example 1, except that the weight ratio of fibrous solid electrolyte: particle-shaped solid electrolyte was changed to 30:20.

### Example 5: Mono-cell all-solid-state secondary battery, sulfide-based cathode active material (Li₂S-C-LiI composite), fibrous solid electrolyte: particle-shaped solid electrolyte = 40:10 by weight ratio (including first fibrous solid electrolyte)

A solid-state secondary battery was manufactured in the same manner as in Example 1, except that the weight ratio of fibrous solid electrolyte: particle-shaped solid electrolyte was changed to 40:10.

### Example 6: Mono-cell all-solid-state secondary battery, sulfide-based cathode active material (Li₂S-C-LiI-fibrous solid electrolyte composite), fibrous solid electrolyte: particle-shaped solid electrolyte = 10:40 by weight ratio (including first and second fibrous solid electrolytes)

An all-solid-state secondary battery was manufactured in the same manner as in Example 1, except that a Li₂S-C-LiI-fibrous solid electrolyte composite was used instead of the Li₂S-CNF composite as the cathode active material.

The Li₂S-CNF-fibrous solid electrolyte composite was prepared by the following method.

A Li₂S-CNF composite was prepared in the same manner as in Example 1. A mixture of the Li₂S-C-Lil composite and the CNF-Li₆PS₅Cl composite prepared in Preparation Example 1 at a weight ratio of 1 4:1 was mixed at low speed using a mixer, and then milled again using a mixer at a rotation speed of about 100 to 2000 rpm for about 0.1 to 20 hours to prepare a Li₂S-C-LiI-fibrous solid electrolyte composite.

### Example 7: Mono-cell all-solid-state secondary battery, sulfide-based cathode active material (Li₂S-C-LiI-fibrous solid electrolyte composite), fibrous solid electrolyte: particle-shaped solid electrolyte = 0:50 by weight ratio (including particle-shaped solid electrolyte)

An all-solid-state secondary battery was manufactured in the same manner as in Example 1, except that the Li₂S-C-LiI-fibrous solid electrolyte composite used in Example 6 was used instead of the Li₂S-CNF composite as the cathode active material, and the weight ratio of the fibrous solid electrolyte and the particulate solid electrolyte in the cathode mixture was changed to 0:50 such that the fibrous solid electrolyte was not used.

### Example 8: Mono-cell all-solid-state secondary battery, sulfide-based cathode active material (Li₂S-C-LiI composite), fibrous solid electrolyte: particle-shaped solid electrolyte = 10:40 by weight ratio, two-layer cathode active material layer (disposed at upper end of fibrous solid electrolyte)

A first cathode mixture was prepared in the same manner as in Example 1.

A second cathode mixture was prepared in the same manner as in Example 1, except that the weight ratio of the fibrous solid electrolyte and the particle-shaped solid electrolyte was changed to 0:50 such that the fibrous solid electrolyte was not used.

An all-solid-state secondary battery was manufactured in the same manner as in Example 1, except that the first cathode mixture (containing a fibrous solid electrolyte) and the second cathode mixture (free of a fibrous solid electrolyte) were sequentially arranged on a cathode current collector to manufacture a cathode layer.

The cathode active material layer includes a first cathode active material layer derived from the first cathode mixture and a second cathode active material layer derived from the second cathode mixture, and their thicknesses were each 50 µm.

The first cathode active material layer adjacent to the cathode current collector contained a fibrous solid electrolyte, and the second cathode active material layer adjacent to the solid electrolyte layer was free of the fibrous solid electrolyte.

### Example 9: Mono-cell all-solid-state secondary battery, sulfide-based cathode active material (Li₂S-C-LiI composite), fibrous solid electrolyte: particle-shaped solid electrolyte = 10:40 by weight ratio, two-layer cathode active material layer (disposed at lower end of fibrous solid electrolyte)

An all-solid-state secondary battery was manufactured in the same manner as in Example 8, except that the positions of the first cathode active material layer and the second cathode active material layer were reversed, so that the second cathode active material layer was disposed adjacent to the cathode current collector and the first cathode active material layer was disposed adjacent to the solid electrolyte layer. The second cathode active material layer adjacent to the cathode current collector contained a fibrous solid electrolyte, and the first cathode active material layer adjacent to the solid electrolyte layer was free of the fibrous solid electrolyte.

### Example 10: Mono-cell all-solid-state secondary battery, oxide-based cathode active material (NCA), fibrous solid electrolyte: particle-shaped solid electrolyte = 10:40 by weight ratio (entirely disposed at upper and lower ends of fibrous solid electrolyte)

### (Manufacture of cathode layer)

LiNi_{0.8}Co_{0.15}Mn_{0.05}O₂ (NCM) coated with Li₂O-ZrO₂ (LZO) was prepared as a cathode active material. The cathode active material coated with LZO was manufactured according to the method disclosed in Korean Patent Publication No. 10-2016-0064942. The CNF-Li6PS5Cl composite prepared in Preparation Example 1 was prepared as a first fibrous solid electrolyte. Li₆PS₅Cl, an argyrodite-type crystal (D50 = 0.5 µm, crystalline), was prepared as an irregular particle-shaped solid electrolyte. Polytetrafluoroethylene (PTFE) was prepared as a binder. Carbon nanofibers (CNF) were prepared as a conductive agent. A slurry, in which such materials were mixed with a xylene solvent at a weight ratio of cathode active material: first fibrous solid electrolyte: irregular particle-shaped solid electrolyte: conductive agent: binder = 84: 2: 9.5: 3: 1.5, was formed into a sheet shape, and then dried in vacuum at 40°C for 8 hours to prepare a cathode sheet. The prepared cathode sheet was disposed on a carbon layer of a cathode current collector made of an aluminum foil coated with the carbon layer on one surface thereof, and heated and roll-pressed to manufacture a cathode layer. The total thickness of the cathode layer was about 120 µm. The thickness of each of the cathode active material layers was about 95 µm, and the thickness of the aluminum foil coated with carbon was about 25 µm. The initial charge capacity of the cathode layer (that is, the cathode active material layer) was measured using the above-described half-cell. The ratio (B/A) of the initial charge capacity (B) of the first anode active material layer to the initial charge capacity (A) of the cathode active material layer was less than 0.5. The initial charge capacity of the cathode active material layer was determined by charging from the 1st open circuit voltage to 4.25 V vs. Li/Li+. The initial charge capacity of the first anode active material layer was determined by charging from the 2nd open circuit voltage to 0.01 V vs. Li/Li+.

### (Manufacture of all-solid-state secondary battery)

An all-solid-state secondary battery was manufactured in the same manner as in Example 1, except that the above-described cathode layer was used.

### Comparative Example 1: Mono-cell all-solid-state secondary battery, sulfide-based cathode active material (Li₂S-C-LiI composite), fibrous solid electrolyte: particle-shaped solid electrolyte = 0:50 by weight ratio

An all-solid-state secondary battery was manufactured in the same manner as Example 1, except that the weight ratio of a fibrous solid electrolyte and a particle-shaped solid electrolyte was changed to 0:50 such that the fibrous solid electrolyte was not used.

### Comparative Example 2: Mono-cell all-solid-state secondary battery, oxide-based cathode active material (NCA), fibrous solid electrolyte: particle-shaped solid electrolyte = 0:50 by weight ratio

An all-solid-state secondary battery was manufactured in the same manner as Example 10, except that the weight ratio of a fibrous solid electrolyte and a particle-shaped solid electrolyte was changed to 0:50 such that the fibrous solid electrolyte was not used.

### Comparative Example 3: Mono-cell all-solid-state secondary battery, sulfide-based cathode active material (Li₂S-C-LiI composite), simple mixture of CNF and Li₆PS₅Cl instead of fibrous solid electrolyte (composite of CNF and Li₆PS₅Cl)

An all-solid-state secondary battery was used in the same manner as in Example 1, except that a mixture of CNF and Li₆PS₅Cl of a weight ratio of 2:1 was used instead of a fibrous solid electrolyte (a composite of CNF and Li₆PS₅Cl).

### Comparative Example 4: Mono-cell all-solid-state secondary battery, oxide-based cathode active material (NCA), simple mixture of CNF and Li₆PS₅Cl instead of fibrous solid electrolyte (composite of CNF and Li₆PS₅Cl)

An all-solid-state secondary battery was used in the same manner as in Example 10, except that a mixture of CNF and Li₆PS₅Cl of a weight ratio of 2:1 was used instead of a fibrous solid electrolyte (a composite of CNF and Li₆PS₅Cl).

### Reference Example 1: Sulfide-based cathode active material, no inactive member used (free)

An all-solid-state secondary battery was manufactured in the same manner as in Example 1, except that a flame-retardant inactive member (that is, a gasket) was not used during the manufacture of the all-solid-state secondary battery.

### Reference Example 2: Oxide-based cathode active material, no inactive member used (free)

An all-solid-state secondary battery was manufactured in the same manner as in Example 10, except that a flame-retardant inactive member (that is, a gasket) was not used during the manufacture of the all-solid-state secondary battery.

### Example 11: One bi-cell all-solid-state secondary battery, sulfide-based cathode active material (Li₂S-C-LiI composite), fibrous solid electrolyte: particle-shaped solid electrolyte = 10:40 by weight ratio, first two-dimensional solid electrolyte

### (Manufacture of bi-cell all-solid-state secondary battery)

A cathode layer was prepared in the same manner as in Example 1, except that cathode active material layers were prepared to be disposed on both surfaces of a cathode current collector.

The total thickness of the cathode layer was about 220 µm. The thickness of each of the cathode active material layers was about 100 µm, and the thickness of an aluminum foil coated with carbon was about 20 µm.

Two anode layers, two solid electrolyte layers, and two flame-retardant inactive members were prepared in the same manner as in Example 1.

Referring to FIG. 10, a solid electrolyte layer is disposed on an anode layer such that a first anode active material layer is in contact with the solid electrolyte layer, and a cathode layer is disposed on the solid electrolyte layer. The cathode layer has a structure in which cathode active material layers are disposed on both surfaces of a cathode current collector, respectively. A gasket was disposed around the cathode layer to surround the cathode layer and come into contact with the solid electrolyte layer. The thickness of the gasket was about 220 µm. The gasket may have a structure in which two gasket sheets each having a thickness of 110 µm are laminated, or may be one gasket sheet having a thickness of 220 µm. The above-described flame-retardant inactive member was used as the gasket.

The gasket was disposed so as to be in contact with the side surface of the anode layer and the solid electrolyte layer. The cathode layer is disposed at the center of the solid electrolyte layer, and the gasket is disposed to surround the cathode layer and extend to the end of the solid electrolyte layer. The area of the cathode layer was about 90% of the area of the solid electrolyte layer, and the gasket was disposed over the entire area of the remaining 10% of the solid electrolyte layer where the cathode layer was not disposed. A solid electrolyte layer was disposed on the cathode layer and the gasket, and an anode layer was disposed on the solid electrolyte layer to prepare a laminate.

The prepared laminate was treated by plate pressing at 85 °C. The solid electrolyte layer is sintered by this plate pressing, thereby improving battery characteristics. The thickness of one sintered solid electrolyte layer was about 45 µm. The area of the solid electrolyte layer was equal to the area of the anode layer. The pressed laminate was put into a pouch and sealed in vacuum to manufacture an all-solid-state secondary battery. A portion of the cathode current collector and a portion of the anode current collector was extended outside the sealed battery and was used as a cathode layer terminal and an anode layer terminal.

### Evaluation Example 1: High-temperature lifespan characteristics test

The charge/discharge characteristics of the all-solid-state secondary batteries manufactured in Examples 1 to 9, Example 11, Comparative Example 1, Comparative Example 3, and Reference Example 1 were evaluated by the following charge/discharge test. The charge/discharge test was performed by putting the all-solid-state secondary battery into a constant temperature bath at 45°C.

In the first cycle, charging was performed for 12.5 hours at a constant current of 0.6 mA/cm² until a battery voltage reached 2.5 V to 2.8 V. Subsequently, discharging was performed for 12.5 hours at a constant current of 0.6 mA/cm² until the battery voltage reached 0.5 V.

The charge/discharge characteristics of the all-solid-state secondary batteries manufactured in Example 10, Comparative Example 2, Comparative Example 4, and Reference Example 2 were evaluated by the following charge/discharge test. The charge/discharge test was performed by putting the all-solid-state secondary battery into a constant temperature bath at 45°C.

In the first cycle, charging was performed for 12.5 hours at a constant current of 0.6 mA/cm² until a battery voltage reached 3.9 V to 4.25 V. Subsequently, discharging was performed for 12.5 hours at a constant current of 0.6 mA/cm² until the battery voltage reached 2.5 V.

The discharge capacity of the first cycle was taken as a standard capacity. After the second cycle, charging and discharging were performed for up to 150 cycles under the same conditions as the first cycle. The measurement results are shown in Table 2 below.

The more the number of cycles required for the discharge capacity to decrease to 95% of the standard capacity after the second cycle, the better the lifespan characteristics were considered.

The all-solid-state secondary batteries of Reference Examples 1 and 2 suffered a short circuit before the first cycle was completed, and thus it was impossible to measure lifespan characteristics.

**[Table 1]**

| | Cycle number [times] |
|---|---|
| Example 1 (mono-cell/Li₂S-C-LiI composite+SE(fiber:particle=10:40 by weight ratio)/cathode gasket/solid electrolyte layer(particle-shaped SE)) | 500 |
| Example 2 (mono-cell/Li₂S-C-LiI composite+SE(fiber:particle=5:45 by weight ratio)/cathode gasket/solid electrolyte layer(particle-shaped SE)) | 400 |
| Example 3 (mono-cell/Li₂S-C-LiI composite+SE(fiber:particle=20:20 by weight ratio)/cathode gasket/solid electrolyte layer(particle-shaped SE)) | 300 |
| Example 4 (mono-cell/Li₂S-C-LiI composite+SE(fiber:particle=30:20 by weight ratio)/cathode gasket/solid electrolyte layer(particle-shaped SE)) | 250 |
| Example 5 (mono-cell/Li₂S-C-LiI composite+SE(fiber:particle=40:10 by weight ratio)/cathode gasket/solid electrolyte layer(particle-shaped SE)) | 200 |
| Example 6 (mono-cell/Li2S-C-LiI-fibrous SE composite+SE(fiber:particle=10:40 by weight ratio)/cathode gasket/solid electrolyte layer(particle-shaped SE)) | 600 |
| Example 7 (mono-cell/Li₂S-C-LiI-fibrous SE composite+SE(fiber:particle=0:50 by weight ratio)/cathode gasket/solid electrolyte layer(particle-shaped SE)) | 300 |
| Example 8 (mono-cell/Li₂S-C-LiI composite+SE(fiber: particle=40: 10 by weight ratio), two-layer structure(upper fibrous SE)/cathode gasket/solid electrolyte layer(particle-shaped SE)) | 350 |
| Example 9 (mono-cell/Li₂S-C-LiI composite+SE(fiber: particle=40: 10 by weight ratio), two-layer structure(lower fibrous SE)/cathode gasket/solid electrolyte layer(particle-shaped SE)) | 250 |
| Example 10 (mono-cell/NCA+SE (fiber: particle = 10:40 by weight ratio)/cathode gasket/solid electrolyte layer (particle-shaped SE)) | 800 |
| Example 11 (bi-cell structure / others are the same as Example 1) | 600 |
| Comparative Example 1 (mono-cell/Li₂S-C-LiI composite+SE (fiber: particle = 0:50 by weight ratio)/cathode gasket/solid electrolyte layer (particle-shaped SE)) | 200 |
| Comparative Example 2 (mono-cell/NCA+SE (fiber: particle = 0:50 by weight ratio)/cathode gasket/solid electrolyte layer (particle-shaped SE)) | 300 |
| Comparative Example 3 (mono-cell/ Li₂S-C-Lil composite + SE (simple mixture of CNF and SE: particle = 10:40 by weight ratio)/cathode gasket/solid electrolyte layer (particle-shaped SE)) | 300 |
| Comparative Example 4 (mono-cell/NCA+SE (simple mixture of CNF and SE: particle =10:40 by weight ratio)/cathode gasket/solid electrolyte layer (particle=shaped SE)) | 500 |

As shown in Table 1, the all-solid-state secondary batteries of Examples 1 to 9 and Example 12 including the sulfide-based cathode active material had improved lifespan characteristics compared to the all-solid-state secondary batteries of Comparative Examples 1 and 3.

It was determined that the lithium batteries of Examples 1 to 9 had improved lifespan characteristics by having an increased ion conduction path due to the inclusion of fibrous solid electrolytes and by more effectively accommodating a volume change during the charging and discharging of the cathode active material.

In the all-solid-state secondary batteries of Examples 1 to 5, the lifespan characteristics thereof varied depending on the weight ratio of the fibrous solid electrolyte and the particle-shaped solid electrolyte.

The all-solid-state secondary battery of Example 1 including a fibrous solid electrolyte had improved lifespan characteristics compared to the all-solid-state secondary battery of Comparative Example 3 including a simple mixture of graphene and solid electrolyte. It was determined that the simple mixture of graphene and a solid electrolyte deteriorates the performance of the all-solid-state secondary battery due to increased side reactions caused by non-uniform mixing.

The all-solid-state secondary battery of Example 10 including an oxide-based cathode active material had improved lifespan characteristics compared to the all-solid-state secondary batteries of Comparative Examples 2 and 4.

It was determined that the all-solid-state secondary battery of Example 10 had improved lifespan characteristics by having an increased ion conduction path due to the disposition of the fibrous solid electrolyte on the cathode active material layer and by more effectively accommodating a volume change during the charging and discharging of the cathode active material.

The all-solid-state secondary battery of Example 10 including a fibrous solid electrolyte had improved lifespan characteristics compared to the all-solid-state secondary battery of Comparative Example 4 including a simple mixture of graphene and solid electrolyte. It was determined that the simple mixture of graphene and a solid electrolyte deteriorates the performance of the all-solid-state secondary battery due to increased side reactions caused by non-uniform mixing.

It was determined that the all-solid-state secondary battery of Example 11 has improved lifespan characteristics by effectively alleviating a volume change during charging and discharging due to having a bi-cell structure in which components are symmetrically arranged, compared to the all-solid-state secondary batteries of Examples 1 to 5 having a mono-cell structure.

After the first cycle of charging was completed in the all-solid-state secondary batteries of Examples 1 to 11, SEM images of cross-sections of these batteries were measured to confirm that a lithium metal deposition layer corresponding to the second anode active material layer was formed between the solid electrolyte layer and the anode current collector.

As described above, the all-solid-state secondary batteries related to the present embodiment may be applied to various portable devices, vehicles, and the like.

Although exemplary embodiments have been described in detail with reference to the attached drawings, the present inventive concept is not limited thereto. It is obvious that a person with ordinary knowledge in the technical field to which the present inventive concept belongs can derive various examples of changes or modifications within the scope of the technical idea described in the patent claims, and these also naturally belong to the technical scope of the present inventive concept.

### List of Reference Numerals for Major Elements

| | | | |
|---|---|---|---|
| 1: | All-solid-state secondary battery | 10: | Cathode layer |
| 11: | Cathode current collector | 12: | Cathode active material layer |
| 12A: | First region | 12B: | Second region |
| 20: | Anode layer | 21: | Anode current collector |
| 22: | First anode active material layer | 30: | Solid electrolyte layer |
| 40: | Inactive member | | |
| 100: | First fibrous sulfide-based solid electrolyte | | |
| 110: | Core | 120: | Shell |
| 130: | Interlayer | | |

### Industrial Applicability

According to one aspect, it is possible to provide an all-solid-state secondary battery with improved cycle characteristics by using an all-solid-state secondary battery having a novel structure.

## Claims

1. An all-solid-state secondary battery comprising: a cathode layer; an anode layer; and a solid electrolyte layer between the cathode layer and the anode layer,
wherein the cathode layer includes a cathode current collector and a cathode active material layer on at least one surface of the cathode current collector,
at least one of the cathode active material layer and the solid electrolyte layer includes a first fibrous sulfide-based solid electrolyte,
the anode layer includes an anode current collector and a first anode active material layer on one surface of the anode current collector, and
an initial charge capacity (B) of the first anode active material layer is less than about 50% of an initial charge capacity (A) of the cathode active material layer.

2. The all-sold-state secondary battery of claim 1, wherein the first fibrous sulfide-based solid electrolyte is defined by length and diameter, and an aspect ratio of the length and the diameter is about 5 or more,
the length of the first fibrous sulfide-based solid electrolyte is about 1 µm to about 50 µm and the diameter of the first fibrous sulfide-based solid electrolyte is about 10 nm to about 10 µm, and
the first fibrous sulfide-based solid electrolyte has a rod structure, a tube structure, a needle structure, a wire structure, or a combination thereof.

3. The all-sold-state secondary battery of claim 1, wherein a cross-section of the first fibrous sulfide-based solid electrolyte orthogonal to a lengthwise direction of the first fibrous sulfide-based solid electrolyte has an irregular, circular or polygonal shape,
the polygonal shape includes a triangular, quadrangular, pentagonal, hexagonal, heptagonal, octagonal, nonagonal, or decagonal shape, and a circularity of the cross-section of the first fibrous sulfide-based solid electrolyte is 0.6 or more.

4. The all-sold-state secondary battery of claim 1, wherein the first fibrous sulfide-based solid electrolyte includes a core and a shell on the core,
the core includes a carbon-based material, a polymer, a metal-containing inorganic material, a sulfide-based solid electrolyte, an oxide-based solid electrolyte, or a combination thereof,
the carbon-based material, the polymer, the metal-containing inorganic material, or the combination thereof further includes P, S, or a combination thereof,
the shell includes a sulfide-based solid electrolyte, an oxide-based solid electrolyte, a coating material, or a combination thereof,
at least one of the core and shell includes a sulfide-based solid electrolyte, and
the core includes a one-dimensional nanostructure, and the one-dimensional nanostructure includes carbon nanofibers, carbon nanorods, carbon nanotubes, carbon nanoneedles, carbon nanowires, SiO₂, TiO₂, Al₂O₃, AIN, SiC, BaTiO₃, or a combination thereof.

5. The all-sold-state secondary battery of claim 4, wherein a ratio of a first diameter of the core and a first thickness of the shell is 1: 0.01 to 1: 100, and
a ratio of a first length of the core and a second length of the shell is 1: 1 to 1: 10.

6. The all-sold-state secondary battery of claim 1, wherein the cathode active material layer includes: a first region adjacent to the cathode current collector; and a second region adjacent to the solid electrolyte layer, and the first fibrous sulfide-based solid electrolyte is present in the first region, and the first fibrous sulfide-based solid electrolyte is absent from the second region,
the first fibrous sulfide-based solid electrolyte is present in the second region, and the first fibrous sulfide-based solid electrolyte is absent from the first region, or
the first fibrous sulfide-based solid electrolyte is present in the first region and the second region.

7. The all-sold-state secondary battery of claim 6, wherein in the first region, the first fibrous sulfide-based solid electrolyte is homogeneous or has a concentration gradient in which the first fibrous sulfide-based solid electrolyte decreases in a direction from the cathode current collector toward the solid electrolyte layer,
in the second region, the first fibrous sulfide-based solid electrolyte is homogeneous or has a concentration gradient in which the first fibrous sulfide-based solid electrolyte decreases in a direction from the solid electrolyte layer toward the cathode current collector,
in the first region and the second region, the first fibrous sulfide-based solid electrolyte is homogeneous or has a concentration gradient in which the first fibrous sulfide-based solid electrolyte decreases in a direction from the cathode current collector toward the solid electrolyte layer, or in the first region and the second region, the first fibrous sulfide-based solid electrolyte is homogeneous or has a concentration gradient in which the first fibrous sulfide-based solid electrolyte decreases in a direction from the solid electrolyte layer toward the cathode current collector.

8. The all-sold-state secondary battery of claim 1, wherein a content of the first fibrous sulfide-based solid electrolyte is about 1 wt% to about 50 wt% of a total weight of the cathode active material layer.

9. The all-sold-state secondary battery of claim 1, wherein the cathode active material layer further includes an irregular sulfide-based solid electrolyte distinct from the first fibrous sulfide-based solid electrolyte, and
a weight ratio of the first fibrous sulfide-based solid electrolyte and the irregular sulfide-based solid electrolyte is 1: 99 to 99: 1.

10. The all-sold-state secondary battery of claim 1, wherein the cathode active material layer includes a cathode active material,
the cathode active material includes an oxide-based cathode active material, a sulfide-based cathode active material, or a combination thereof, the oxide-based cathode active material includes a lithium transition metal oxide, a metal oxide, or a combination thereof, the lithium transition metal oxide includes lithium cobalt oxide, lithium nickel oxide, lithium nickel cobalt oxide, lithium nickel cobalt aluminum oxide, lithium nickel cobalt manganese oxide, lithium manganate, lithium iron phosphate, or a combination thereof, and the metal oxide includes iron oxide, vanadium oxide, or a combination thereof, and
the sulfide-based cathode active material includes nickel sulfide, copper sulfide, Li₂S, a Li₂S-containing composite, or a combination thereof.

11. The all-sold-state secondary battery of claim 10, wherein the Li₂S-containing composite includes a composite of Li₂S and carbon, a composite of Li₂S, carbon and a solid electrolyte, a composite of Li₂S and a solid electrolyte, a composite of Li₂S and a lithium salt, a composite of Li₂S, a lithium salt and carbon, a composite of Li₂S and a metal carbide, a composite of Li₂S, carbon and a metal carbide, a composite of Li₂S and a metal nitride, a composite of Li₂S, carbon and a metal nitride, or a combination thereof.

12. The all-sold-state secondary battery of claim 10, wherein the Li₂S-containing composite further includes a second fibrous sulfide-based solid electrolyte,
a content of the second fibrous sulfide-based solid electrolyte is 0.1 wt% to 50 wt% of a total weight of the Li₂S-containing composite, and
a size of the second fibrous sulfide-based solid electrolyte is smaller than a size of the first fibrous sulfide-based solid electrolyte.

13. The all-sold-state secondary battery of claim 1, wherein the cathode active material layer further includes at least one selected from a conductive material and a binder, and
the conductive material includes a carbon-based conductive material.

14. The all-sold-state secondary battery of claim 1, further comprising an inactive member on one side surface of the cathode layer,
wherein the inactive member surrounds the cathode layer along a side surface of the cathode layer, and
the inactive member includes a position-determining unit configured to determine a position of the inactive member on the solid electrolyte layer.

15. The all-sold-state secondary battery of claim 1, wherein the first anode active material layer includes an anode active material and a binder, and the anode active material has a particle form, and an average particle diameter of the anode active material is about 4 µm or less

16. The all-sold-state secondary battery of claim 15, wherein the anode active material includes at least one selected from a carbon-based anode active material and a metal-based anode active material,
the carbon-based anode active material includes amorphous carbon, crystalline carbon, porous carbon, or a combination thereof, and
the metal-based anode active material includes gold (Au), platinum (Pt), palladium (Pd), silicon (Si), silver (Ag), aluminum (Al), bismuth (Bi), tin (Sn), zinc (Zn), or a combination thereof.

17. The all-sold-state secondary battery of claim 15, wherein the anode active material includes a mixture of first particles including amorphous carbon and second particles including a metal, and
a content of the second particles is about 8 wt% to about 60 wt% based on a total weight of the mixture.

18. The all-sold-state secondary battery of claim 15, wherein the anode active material includes: a carbon-based support; and a metal-based anode active material supported on the carbon-based support,
the metal-based anode active material includes a metal, a metal oxide, a composite of a metal and a metal oxide, or a combination thereof,
the metal-based anode active material has a particle form, and a particle diameter of the metal-based anode active material is about 1 nm to about 200 nm, and
the carbon-based support has a particle form, and a particle diameter of the carbon-based support is about 10 nm to about 2 µm.

19. The all-sold-state secondary battery of claim 1, further comprising a second anode active material layer between the solid electrolyte layer and the anode current collector,
wherein the second anode active material layer is at least one of between the first anode active material layer and the anode current collector and between the first anode active material layer and the solid electrolyte layer, and
the second anode active material layer is a metal layer including lithium metal or a lithium alloy.

20. The all-sold-state secondary battery of claim 1, wherein at least one of the cathode current collector and the anode current collector includes a base film and a metal layer disposed on at least one surface of the base film,
the base film includes a polymer, and the polymer includes polyethylene terephthalate (PET), polyethylene (PE), polypropylene (PP), polybutylene terephthalate (PBT), polyimide (PI) or a combination thereof, and
the metal layer includes indium (In), copper (Cu), magnesium (Mg), titanium (Ti), iron (Fe), cobalt (Co), nickel (Ni), zinc (Zn), aluminum (Al), germanium (Ge), lithium (Li), or an alloy thereof.
